# EUROPEAN PATENT APPLICATION

(11) **EP 2 747 057 A1**
(43) Date of publication of application: **25.06.2014**
(21) Application number: 13198988.1
(22) Date of filing: 20.12.2013
(51) Int. Cl.: G09B 21/00, G06F 17/21, G06K 9/46

(54) **TEXT-ENLARGEMENT DISPLAY METHOD**

(30) Priority: 21.12.2012 KR 20120151256
(71) Applicant: Samsung Electronics Co., Ltd, Gyeonggi-do 443-742 (KR)
(72) Inventor: Lee, Won-Gi, 443.742 Gyeonggi-do (KR); Lee, Sang-Hyup, 443.742 Gyeonggi-do (KR)
(74) Representative: Nederlandsch Octrooibureau

(57) **Abstract**

A method controls display data in an electronic device (e.g., smart phone), with the method including: receiving an input of a page image including at least one letter (e.g., camera, image file); obtaining at least one text object image by cutting an area that corresponds to the at least one letter from the page image; and displaying the at least one text object image in a selective manner in response to a user input.

## Description

### TECHNICAL FIELD

The present disclosure relates generally to electronic devices, and more particularly, to a method and apparatus for processing a text area included in an image and displaying the result.

### BACKGROUND

Electronic devices in the related art provide more diverse services and optional functions. To improve usefulness of the electronic device and meet different desires of users, various practical applications have been developed.

The electronic device may store and run default applications installed therein at a manufacturing stage and optional applications downloaded via the Internet from application sales websites. Optional applications may be developed by general developers and registered in the sales websites. In this respect, anyone may freely develop and sell his/her application through an application sales website to a user of the electronic device. Tens of thousands to hundreds of thousands of free or paid applications are being provided for electronic devices.

Electronic devices in the related art, such as smartphones and tablet PCs, may store at least tens to hundreds of applications and have shortcut keys to run the applications displayed in the form of icons on touch screens of the electronic devices. The user may run a desired application by touching any one of icons displayed on the touchscreen in the electronic device.

Meanwhile, the electronic device may have a display on the front side and a camera on the rear side of the housing of the electronic device. When the user looks at the display with the electronic device in his/her hand, the user's gaze direction meets the direction in which the camera faces, thus enabling an object at which the user is looking to be displayed on the display. With this property, applications running while displaying an image captured by the camera have been developed.

In the meantime, the elderly or the disabled with poor vision have difficulty reading printed materials, such as books or newspapers, so they use e.g., a magnifying glass to read such printed materials.

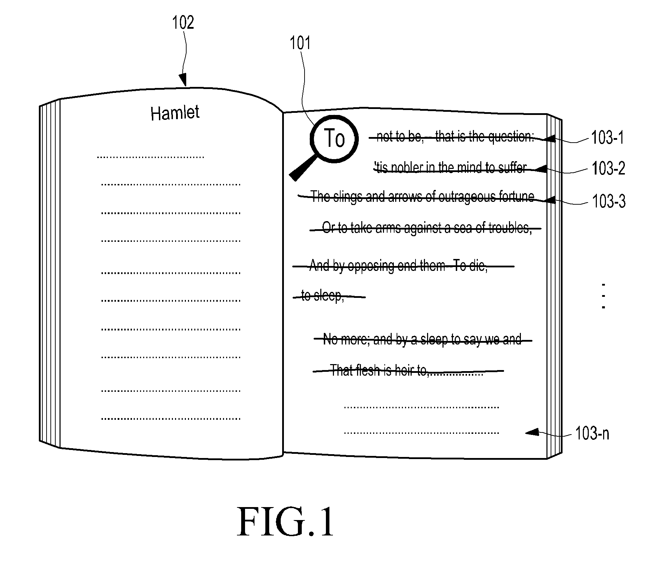

However, as illustrated in FIG. 1, in the related art, in the case in which the user simply uses the magnifying glass and read optically enlarged text, he/she has to move the magnifying glass 101 along lines 103-1 to 103-n of text to read, and he/she may feel dizzy due to the sway of the magnifying glass 101. The repetitive steps of reading a line e.g., the first text line 103-1 till the end and then moving the magnifying glass 101 to the beginning of a next text line, e.g., the second text line 103-2 until the end of the page may cause inconvenience in reading to the user.

Furthermore, an optical character recognition (OCR) application may be implemented in the electronic device to recognize text and display the recognized text to the user, however, in which case too many steps are required to run the OCR application, leading to requirements of powerful hardware, high power consumption, time delay, etc. In addition, various possible scenarios, e.g., a printed state of text, a photography environment, etc. may interfere with correct text recognition and thus cause the inconvenience in reading.

### SUMMARY

To address such problems, the present disclosure provides a method and electronic device for assisting readers, including the elderly or disabled with poor vision, to enjoy quicker and more stable reading.

The present disclosure also provides a method and electronic device for successively displaying the text of a printed material by a simpler user input.

The present disclosure also provides a method and electronic device for stably displaying the text of a printed material without moving the electronic device.

In accordance with an aspect of the present disclosure, a method controls display data in an electronic device, with the method including: receiving an input of a page image including at least one letter; obtaining at least one text object image by cutting an area that corresponds to the at least one letter from the page image; and displaying the at least one text object image in a selective manner in response to a user input.

In accordance with another aspect of the present disclosure, an electronic device includes: a display unit; an input interface; at least one controller; and a memory for storing at least a text-enlargement display program, in which the text-enlargement display program includes instructions, when executed by the controller, for performing the steps of receiving an input of a page image including at least one letter; obtaining at least one text object image by cutting an area that corresponds to the at least one letter from the page image; and providing the at least one text object image in a selective manner to the display unit in response to a user input.

In accordance with another aspect of the present disclosure, a non-transitory computer-readable storage medium having at least one program embodied thereon including instructions for receiving an input of a page image including at least one letter; obtaining at least one text object image by cutting an area that corresponds to the at least one letter from the page image; and providing the at least one text object image in a selective manner to a display unit in response to a user input.

### BRIEF DESCRIPTION OF THE DRAWINGS

The disclosure will become more apparent by describing in detail embodiments thereof with reference to the attached drawings in which:
FIG. 1 is a diagram that illustrates book reading with a magnifying glass in the related art;
FIG. 2 is a schematic block diagram of an electronic device, according to an embodiment of the present disclosure;
FIG. 3A is a front view of the electronic device, according to an embodiment of the present disclosure;
FIG. 3B is a rear view of the electronic device, according to an embodiment of the present disclosure;
FIG. 4 is a flowchart of an image processing method, according to an embodiment of the present disclosure;
FIG. 5A is a diagram that illustrates relationship between an object (a book) and the electronic device to be used with respect to the image processing method, according to an embodiment of the present disclosure;
FIG. 5B illustrates a page image to be used with respect to the image processing method, according to an embodiment of the present disclosure;
FIGS. 6A to 6J illustrate user interfaces provided with respect to the image processing method, according to an embodiment of the present disclosure;
FIGS. 7A to 7K illustrate the image processing method, according to an embodiment of the present disclosure;
FIG. 8 is a flowchart of an image processing method, according to an alternative embodiment of the present disclosure;
FIG. 9 illustrates a main menu user interface provided in the image processing method, according to a further alternative embodiment of the present disclosure;
FIG. 10 is a flowchart of the detailed steps of content generation in step S804 of FIG. 8;
FIGS. 11A to 11H illustrate user interfaces provided with respect to step S804 of FIG. 8;
FIG. 12 is a flowchart of the detailed steps of content reproduction in step S805 of FIG. 8;
FIGS. 13A to 13H illustrate user interfaces provided with respect to step S805 of FIG. 8;
FIG. 14 is a flowchart of the detailed steps of environment setting for a text-enlargement application in step S806 of FIG. 8;
FIGS. 15A and 15B illustrate user interfaces provided with respect to step S806 of FIG. 8; and
FIGS. 16A to 16E illustrate text object file formats generated and stored according to an image processing method of the present disclosure.

### DETAILED DESCRIPTION

The disclosure is described with reference to the accompanying drawings. In the description of the disclosure, a detailed description of known related functions and components may be omitted to avoid unnecessarily obscuring the subject matter of the disclosure. The disclosure may, however, be embodied in many different forms and should not be construed as limited to the embodiments. In addition, terms of the disclosure, which are defined with reference to the functions of the disclosure, may be implemented differently depending on a user or operator's intention and practice. Therefore, the terms should be understood on the basis of the disclosure throughout the specification. The principles and features of the disclosure may be employed in varied and numerous embodiments without departing from the disclosure.

The same reference numbers are used throughout the drawings to refer to the same or similar parts. Furthermore, although the drawings represent embodiments of the disclosure, the drawings are not necessarily to scale and certain features may be exaggerated or omitted in order to more clearly illustrate and describe the disclosure.

Among the terms in the disclosure, an electronic device, a terminal, a mobile device, a portable device, etc. refers to any kind of device capable of processing data which is transmitted or received to or from any external entity. The electronic device, the terminal, the mobile device, the portable device, etc. may display icons or menus on a screen to which stored data and various executable functions are assigned or mapped. The electronic device, the terminal, the mobile device, the portable device, etc. may include a computer, a notebook, a tablet PC, a cellphone, and any known type of electronic device.

Among the terms in the disclosure, a screen refers to a display or other output devices which visually display information to the user, and which optionally may include a touch screen or touch panel capable of receiving and electronically processing tactile inputs from a user using a stylo, a finger of the user, or other techniques for conveying a user selection from the user to the display or to other output devices.

Among the terms in the disclosure, an icon refers to a graphical element such as a figure or a symbol displayed on the screen of the electronic device such that a user may easily select a desired function or data. In particular, each icon has a mapping relation with any function being executable in the electronic device or with any data stored in the electronic device and is used for processing functions or selecting data in the electronic device. When a user selects one of the displayed icons, the electronic device identifies a particular function or data associated with the selected icon. Then the electronic device executes the identified function or displays the identified data.

Among the terms in the disclosure, data refers to any kind of information processed by the electronic device, including text and/or images received from any external entities, messages transmitted or received, and information created when a specific function is executed by the electronic device.

It will be understood that, although the terms first, second, third, etc., may be used to describe various elements, components, regions, layers and/or sections, these elements, components, regions, layers and/or sections should not be limited by these terms. These terms are used to distinguish one element, component, region, layer or section from another region, layer or section. Thus, a first element, component, region, layer or section may be a second element, component, region, layer or section without departing from the teachings of the present disclosure. The terminology used in the present disclosure is for the purpose of describing particular embodiments and is not intended to be limiting of the disclosure. The singular forms "a", "an" and "the" are intended to include the plural forms as well, unless the context clearly indicates otherwise.

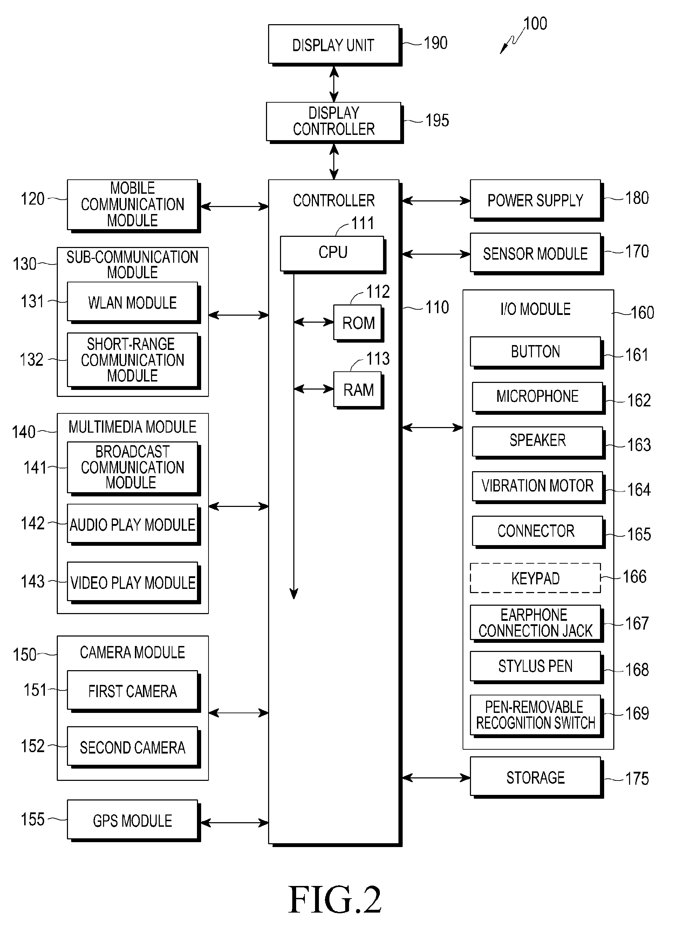

FIG. 2 is a schematic block diagram of an electronic device, according to the embodiment of the present disclosure.

Referring to FIG. 2, the electronic device may be connected to an external device by using an external device connection, such as a sub-communication module 130, a connector 165, and an earphone connecting jack 167. The "external device" may include a variety of devices, such as earphones, external speakers, universal serial bus (USB) memories, chargers, cradles/docks, DMB antennas, electronic payment related devices, health care devices (e.g., blood sugar testers), game consoles, vehicle navigations, etc., which are removable from the electronic device and connected thereto via cable. The "external device" may also include a short range communication device that may be wirelessly connected to the electronic device 100 via short range communication, such as BLUETOOTH, a short range wireless communications technology at the 2.4 GHz band, commercially available from the BLUETOOTH SPECIAL INTEREST GROUP, INC., Near Field Communication (NFC), etc., and a communication device using WI-FI DIRECT, a wireless technology for data exchange over a computer network, commercially available from the WI-FI ALLIANCE, a wireless access point (AP), etc. Furthermore, the external device may include any other device, such as a cell phone, a smartphone, a tablet PC, a desktop PC, and a server.

Referring to FIG. 2, the electronic device 100 includes a display unit 190 and a display controller 195. The electronic device 100 also includes a controller 110, the mobile communication module 120, the sub-communication module 130, a multimedia module 140, a camera module 150, a GPS module 155, an input/output module 160, a sensor module 170, a storage 175, and a power supply 180. The sub-communication module 130 includes at least one of wireless local area network (WLAN) 131 or a short-range communication module 132, and the multimedia module 140 includes at least one of a broadcast communication module 141, an audio play module 142, or a video play module 143. The camera module 150 includes at least one of a first camera 151 or a second camera 152; and the input/output module 160 includes at least one of buttons 161, a microphone 162, a speaker 163, a vibration motor 164, a connector 165, or a keypad 166.

The controller 110 may include a central processing unit (CPU) 111, a read only memory (ROM) 112 for storing a control program, such as an operating system (OS), to control the electronic device 100, and a random access memory (RAM) 113 for storing signals or data input from an external source or for being used as a memory space for working results in the electronic device 100. The CPU 111 may include a single core, dual cores, triple cores, or quad cores. The CPU 111, ROM 112, and RAM 113 may be connected to each other via an internal bus, which may be represented by the arrows in FIG. 2.

The controller 110 may control the mobile communication module 120, the sub-communication module 130, the multimedia module 140, the camera module 150, the GPS module 155, the input/output module 160, the sensor module 170, the storage 175, the power supply 180, a display unit 190, and a display controller 195.

The mobile communication module 120 connects the electronic device 100 to an external device through mobile communication using at least a one-to-one antenna or a one-to-more antenna under the control of the controller 110. The mobile communication module 120 transmits/receives wireless signals for voice calls, video conference calls, short message service (SMS) messages, or multimedia message service (MMS) messages to/from a cell phone, a smartphone, a tablet PC, or another device, with the phones having phone numbers entered into the electronic device 100.

The sub-communication module 130 may include at least one of the WLAN module 131 or the short-range communication module 132. For example, the sub-communication module 130 may include either the WLAN module 131 or the-short range communication module 132, or both.

The WLAN module 131 may be connected to the Internet in a place where there is a wireless access point (AP), under the control of the controller 110. The WLAN module 131 supports the WLAN standard IEEE802.11x of the INSTITUTE OF ELECTRICAL AND ELECTRONIC ENGINEERS (IEEE). The short-range communication module 132 may conduct short-range communication between the electronic device 100 and an image rendering device under the control of the controller 110. The short-range communication may include communications compatible with BLUETOOTH, a short range wireless communications technology at the 2.4 GHz band, commercially available from the BLUETOOTH SPECIAL INTEREST GROUP, INC., infrared data association (IrDA), WI-FI DIRECT, a wireless technology for data exchange over a computer network, commercially available from the WI-FI ALLIANCE, Near Field Communication (NFC), etc.

The electronic device 100 may include at least one of the mobile communication module 120, the WLAN module 131, or the short-range communication module 132 based on the performance requirements of the electronic device 100. For example, the electronic device 100 may include a combination of the mobile communication module 120, the WLAN module 131 and the short- range communication module 132 based on the performance requirements of the electronic device 100.

The multimedia module 140 may include the broadcast communication module 141, the audio play module 142, or the video play module 143. The broadcast communication module 141 may receive broadcast signals (e.g., television broadcast signals, radio broadcast signals, or data broadcast signals) and additional broadcast information (e.g., an electric program guide (EPG) or an electric service guide (ESG)) transmitted from a broadcasting station through a broadcast communication antenna under the control of the controller 110. The audio play module 142 may play digital audio files (e.g., files having extensions, such as mp3, wma, ogg, or wav) stored or received under the control of the controller 110. The video play module 143 may play digital video files (e.g., files having extensions, such as mpeg, mpg, mp4, avi, move, or mkv) stored or received under the control of the controller 110. The video play module 143 may also play digital audio files.

The multimedia module 140 may include the audio play module 142 and the video play module 143 except for the broadcast communication module 141. The audio play module 142 or video play module 143 of the multimedia module 140 may be included in the controller 110.

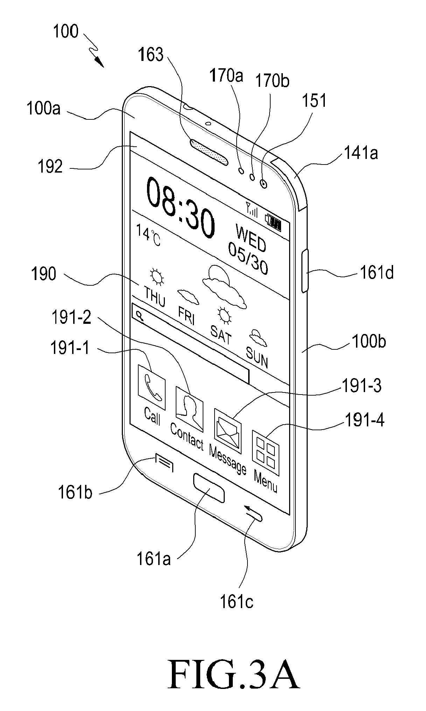

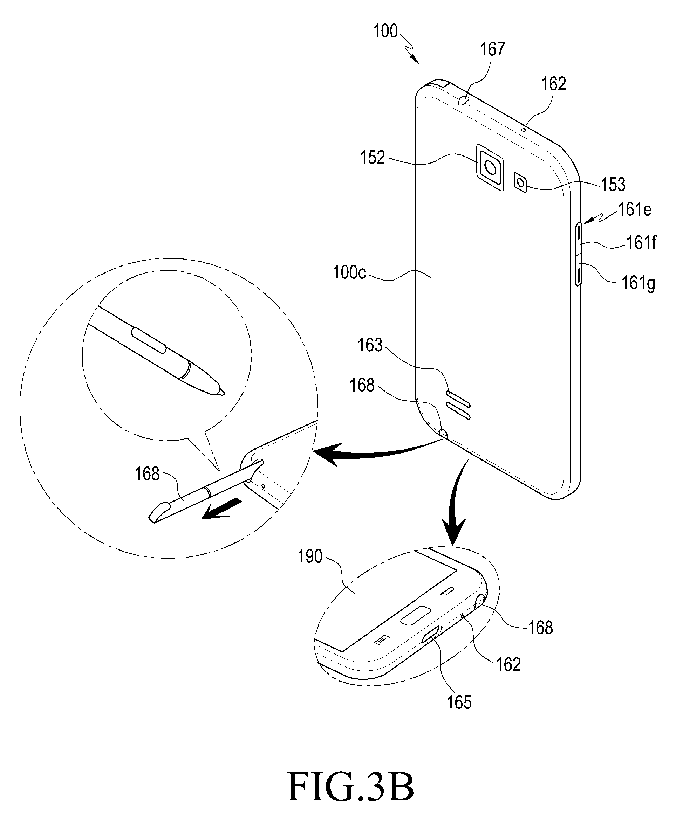

The camera module 150 may include at least one of the first camera 151 or the second camera 152 for capturing still images or video images under the control of the controller 110. Furthermore, the first or second camera 151 or 152 may include an auxiliary light source (e.g., flash 153, FIG. 3) for providing an amount of light for capturing an image. The first camera 151 may be placed on the front of the electronic device 100 and the second camera 152 may be placed on the back of electronic device 100. Alternatively, the first and second cameras 151 and 152 are arranged adjacent to each other (e.g., the distance between the first and second cameras 151 and 152 may be in the range of 1 cm. to 8 cm.), capturing 3D still images or 3D video images.

The GPS module 155 receives radio signals from a plurality of GPS satellites in orbit around the Earth, and may calculate the position of the electronic device 100 by using time of arrival from the GPS satellites to the electronic device 100.

The input/output module 160 may include at least one of the plurality of buttons 161, the microphone 162, the speaker 163, the vibrating motor 164, the connector 165, or the keypad 166.

The at least one of the buttons 161 may be arranged on the front, side or back of the housing of the electronic device 100, and may include at least one of a power/lock button, a volume button, a menu button, a home button, a back button, or a search button.

The microphone 162 generates electric signals by receiving voice or sound under the control of the controller 110.

The speaker 163 may output sounds externally corresponding to various signals (e.g., radio signals, broadcast signals, digital audio files, digital video files or photography signals) from the mobile communication module 120, sub-communication module 130, multimedia module 140, or camera module 150 under the control of the controller 110. The speaker 163 may output sounds (e.g., button-press sounds or ringback tones) that correspond to functions performed by the electronic device 100. There may be one or multiple speakers 163 arranged in at least one position on or in the housing of the electronic device 100.

The vibrating motor 164 may convert an electric signal to a mechanical vibration under the control of the controller 110. For example, the electronic device 100 in a vibrating mode operates the vibrating motor 164 when receiving a voice call from another device. There may be at least one vibration motor 164 inside the housing of the electronic device 100. The vibration motor 164 may operate in response to a touch activity or continuous touches of a user over the display unit 190.

The connector 165 may be used as an interface for connecting the electronic device 100 to the external device or a power source. Under the control of the controller 110, the electronic device 100 may transmit data stored in the storage 175 of the electronic device 100 to the external device via a cable connected to the connector 165, or receive data from the external device. Furthermore, the electronic device 100 may be powered by the power source via a cable connected to the connector 165 or may charge the battery using the power source.

The keypad 166 may receive key inputs from the user to control the electronic device 100. The keypad 166 includes a mechanical keypad formed in the electronic device 100, or a virtual keypad displayed on the display unit 190. The mechanical keypad formed in the electronic device 100 may optionally be omitted from the implementation of the electronic device 100, depending on the performance requirements or structure of the electronic device 100.

An earphone may be inserted into the earphone connecting jack 167 and thus may be connected to the electronic device 100.

A stylus pen 168 may be inserted and removably retained in the electronic device 100, and may be drawn out and detached from the electronic device 100.

A pen-removable recognition switch 169 that operates in response to attachment and detachment of the stylus pen 168 is equipped in an area inside the electronic device 100 where the stylus pen 168 is removably retained, and sends a signal that corresponds to the attachment or the detachment of the stylus pen 168 to the controller 100. The pen-removable recognition switch 169 may have a direct or indirect contact with the stylus pen 168 when the stylus pen 168 is inserted into the area. The pen-removable recognition switch 169 generates the signal that corresponds to the attachment or detachment of the stylus pen 168 based on the direct or indirect contact and provides the signal to the controller 110.

The sensor module 170 includes at least one sensor for detecting a status of the electronic device 100. For example, the sensor module 170 may include a proximity sensor for detecting proximity of a user to the electronic device 100; a illumination sensor for detecting an amount of ambient light of the electronic device 100; a motion sensor for detecting the motion of the electronic device 100 (e.g., rotation of the electronic device 100, acceleration or vibration applied to the electronic device 100); a geomagnetic sensor for detecting a point of the compass using the geomagnetic field; a gravity sensor for detecting a direction of gravity; and an altimeter for detecting an altitude by measuring atmospheric pressure. At least one sensor may detect the status and generate a corresponding signal to transmit to the controller 110. The sensor of the sensor module 170 may be added or removed depending on the performance requirements of the electronic device 100 of the electronic device 100.

The storage 175 may store signals or data input/output according to operations of the mobile communication module 120, the sub-communication module 130, the multimedia module 140, the camera module 150, the GPS module, the input/output module 160, the sensor module 170, the display unit 190 under the control of the controller 110. The storage 175 may store the control programs and applications for controlling the electronic device 100 or the controller 110.

The term "storage" refers to the storage 175, and also to the ROM 112, RAM 113 in the controller 110, or a memory card (e.g., an SD card, a memory stick) installed in the electronic device 100. The storage may also include a non-volatile memory, a volatile memory, a hard disc drive (HDD), or a solid state drive (SSD).

The power supply 180 may supply power to at least one battery placed inside the housing of the electronic device 100 under the control of the controller 110. The at least one battery powers the electronic device 100. The power supply 180 may supply the electronic device 100 with the power input from the external power source via a cable connected to the connector 165. The power supply 180 may also supply the electronic device 100 with wireless power from an external power source using a wireless charging technology.

The display controller 195 receives information (e.g., information to be generated for making calls, data transmission, broadcast, or photography) that is processed by the controller 110, converts the information to data to be displayed on the display unit 190, and provides the data to the display unit 190. Then the display unit 190 displays the data received from the display controller 195. For example, in a call mode, the display unit 190 may display a user interface (UI) or graphic user interface (GUI) with respect to a call. The display unit 190 may include at least one of liquid crystal displays, thin film transistor-liquid crystal displays, organic light-emitting diodes, flexible displays, 3D displays, or electrophoretic displays.

The display unit 190 may be used as an output device and also as an input device, and for the latter case, may have a touchscreen panel to operate as a touch screen. The display unit 190 may send to the display controller 195 an analog signal that corresponds to at least one touch to the UI or GUI. The display unit 190 may detect the at least one touch by user's physical contact (e.g., by fingers including thumb) or by a touchable input device (e.g., the stylus pen). The display unit 190 may also receive a dragging movement of a touch among at least one touch and transmit an analog signal that corresponds to the dragging movement to the display controller 195. The display unit 190 may be implemented to detect at least one touch in e.g., a resistive method, capacitive method, infrared method, or acoustic wave method.

The term 'touches' are not limited to physical touches by a physical contact of the user or contacts with the touchable input device, but may also include touchless proximity (e.g., maintaining a detectable distance less than 1 mm. between the display unit 190 and the user's body or touchable input device). The detectable distance from the display unit 190 may vary depending on the performance requirements of the electronic device 100 or structure of the electronic device 100, and in particular, the display unit 190 may output different values (e.g., current values) for touch detection and hovering detection to distinguishably detect that a touch event occurred by a contact with the user's body or the touchable input device and a contactless input (e.g., a hovering event). Furthermore, the display unit 190 may output different values (e.g., current values) for hovering detection over distance from where the hovering event occurs.

The display controller 195 converts the analog signal received from the display unit 190 to a digital signal (e.g., in XY coordinates on the touch panel or display screen) and transmits the digital signal to the controller 110. The controller 110 may control the display unit 190 by using the digital signal received from the display controller 195. For example, in response to the touch event or the hovering event, the controller 110 may enable a shortcut icon displayed on the display unit 190 to be selected or to be executed. The display controller 195 may also be incorporated in the controller 110.

Further, the display controller 195 may determine the distance between where the hovering event occurs and the display unit 190 by detecting a value (e.g., a current value) output through the display unit 190, convert the determined distance to a digital signal (e.g., with a Z coordinate), and provide the digital signal to the controller 110.

Furthermore, depending on implementations, the electronic device 100 may have two or more display units.

The display unit 190 may include at least two touchscreen panels for detecting touches or proximity thereto by the user's body or the touchable input device to receive both inputs by the user's body or the touchable input device simultaneously. The at least two touchscreen panels provide different output values to the display controller 195, and the display controller 195 may differentiate inputs by the user's body and inputs by the touchable input device through the touchscreen by differently recognizing the values input from the at least two touchscreen panels.

FIG. 3A is a front view of the electronic device 100, according to the embodiment of the present disclosure, FIG. 3B is a rear view of the electronic device 100, according to the embodiment of the present disclosure.

Referring to FIGS. 3A and 3B, the front face 100a of the electronic device 100 has the display unit 190 placed in the center, to provide a centrally located screen within the housing and borders of the front face 100a of the electronic device 100. The display unit 190 may be large enough to occupy most of the front face 100a of the electronic device 100. In FIG. 3A, the display unit 190 shows an example of displaying a main home screen. The main home screen is a first screen to be displayed on the display unit 190 when the electronic device 100 is turned on or as soon as the screen is unlocked. In a case in which the electronic device 100 has multiple pages of different home screens, the main home screen may be the first or a predetermined one of the multiple pages of home screens. In the main home screen, shortcut icons 191-1, 191-2, 191-3 for running frequently-used applications, a main menu key 191-4, the time, the weather, etc. may be displayed. If selected, the main menu key 191-4 displays a menu screen on the display unit 190. In an upper part of the display unit 190, a status bar 192 in which to display statuses of the electronic device 100, such as a battery charging state, an intensity of received signals, a current time, etc. may be displayed.

In a lower part of the front face 100a, a home button 161a, a menu button 161b, and a back button 161c may be implemented as physical buttons 161 on or in the housing to the electronic device 100. Alternatively, virtual buttons as icons in the screen of the display unit 190, representing the home button 161a, the menu button 161b, and the back button 161c, may be displayed and visually presented instead of or in addition to the physical buttons 161a, 161b, 161c.

When selected, the home button 161 a displays the main home screen on the display unit 190. For example, if the home key 161 a is selected while any home screen other than the main home screen or a menu screen is displayed on the display unit 190, the main home screen may be displayed on the display unit 190. Furthermore, while applications are running on the display unit 190, if the home button 161a is selected, the main home screen, as shown in FIG. 3A, may be displayed on the display unit 190. The home button 161 a may also be used to display recently used applications or a task manager on the display unit 190.

The menu button 161b provides a link menu that may be used on the display unit 190. The link menu may include a widget addition menu, a background change menu, a search menu, an editor menu, an environment setting menu, etc.

The back button 161 c, when touched, may display a screen that was displayed right before a current screen or may stop a most recently used application.

On the edge of the front face 100a of the electronic device 100, the first camera 151, an illumination sensor 170a, and an proximity sensor 170b may be placed. On the back face 100c of the electronic device 100, shown in FIG. 3B, the second camera 152, the flash 153, and the speaker 163 may be arranged.

On the side 100b of the electronic device 100, e.g., a power/reset button 161d, a volume button 161f having a volume increase button 161e and a volume decrease button 161g, and a terrestrial DMB antenna 141a for broadcast reception, a first microphone 162, etc. may be placed. The DMB antenna 141a may be removable from or fixed to the electronic device 100.

On the lower side of the electronic device 100, the connector 165 is formed. The connector 165 has a number of electrodes and may be connected to an external apparatus via a cable. On the upper side of the electronic device 100, a second microphone 162 and the earphone connecting jack 167 may be formed. The earphone connecting jack 167 may have the earphone inserted thereto.

There may also be a hole to removably retain the stylus pen 168 arranged on the lower side of the electronic device 100. A stylus pen 168 may be inserted and removably retained in the hole of the electronic device 100 and be drawn out and detached from the electronic device 100.

The methods according to embodiments of the present disclosure may be implemented in program instructions which are executable by various computing devices and recorded in non-transitory computer-readable media. The non-transitory computer-readable media may include program instructions, data files, data structures, etc., implemented separately or in combination. The program instructions recorded on the non-transitory computer-readable media may be designed especially for the present disclosure.

The method may also be implemented in program instructions and stored in the storage 175, and the program instructions may be temporarily stored in the RAM 113 of the controller 111 to be executed. The controller 111 may control hardware components of the electronic device 100 according to the program instructions of the method, may store in the storage 175 data temporarily or permanently generated during the execution of the method, and may provide a UI to perform the method with the display controller 195.

In the embodiment of the present disclosure, for convenience of explanation, the display unit 190 outputs or displays the UI, GUI, or menus while detecting the user's touch, but the present disclosure is not limited thereto. For example, the display unit 190 may display various information (e.g., information for making calls, data transmission, broadcast, photography), and a separate input device (e.g., a keypad, buttons, a mouse, etc.) for receiving user inputs may also be connected locally or outside of the electronic device 100.

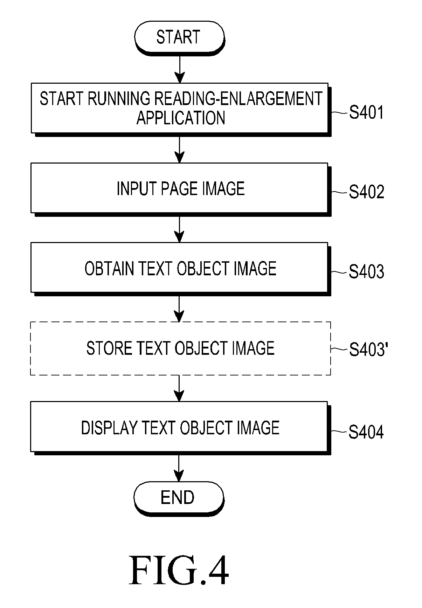

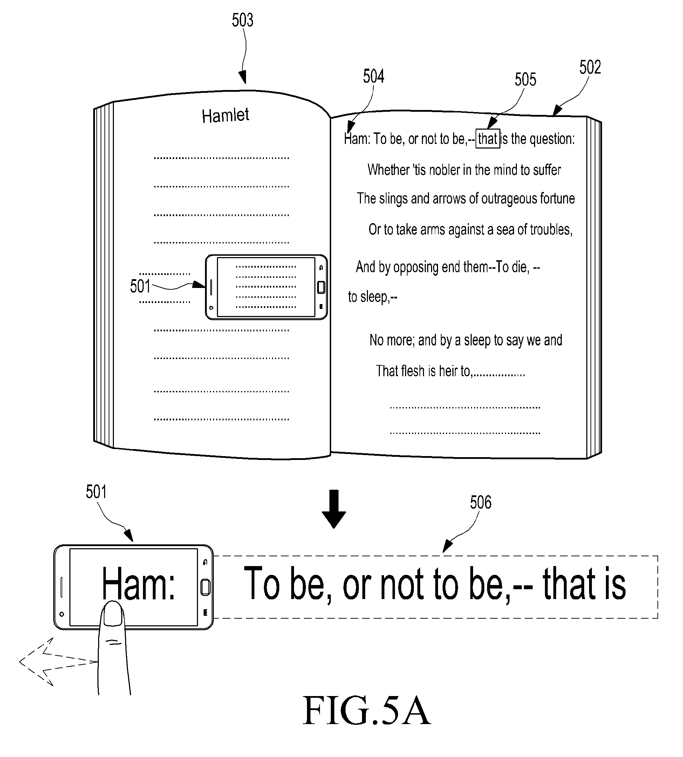

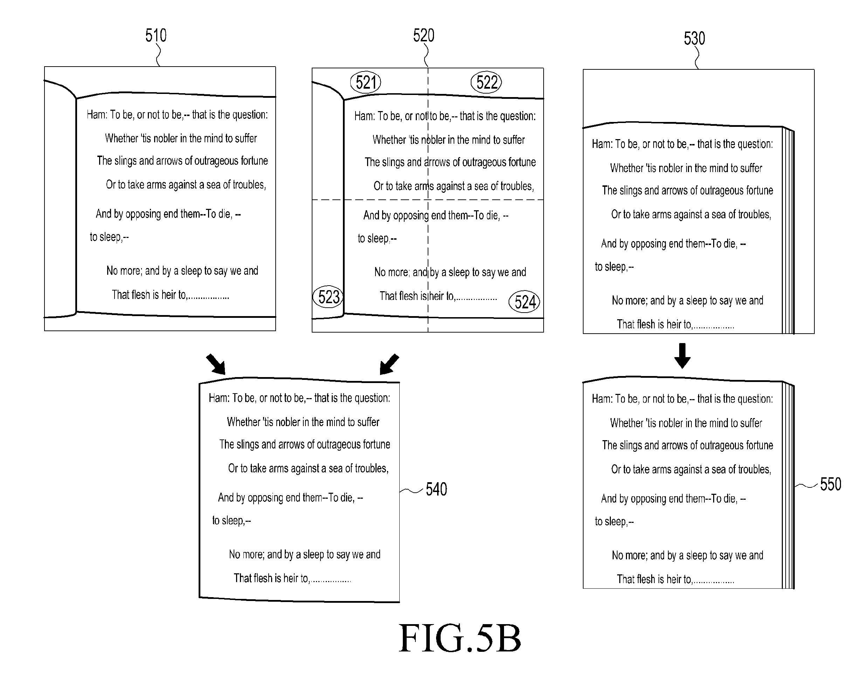

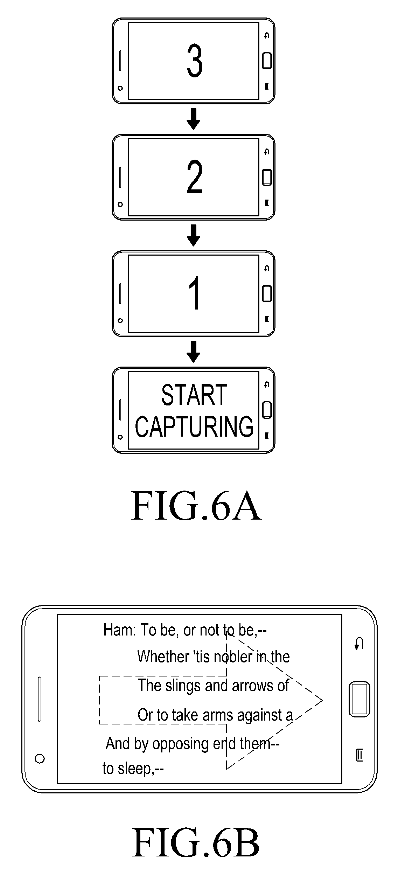

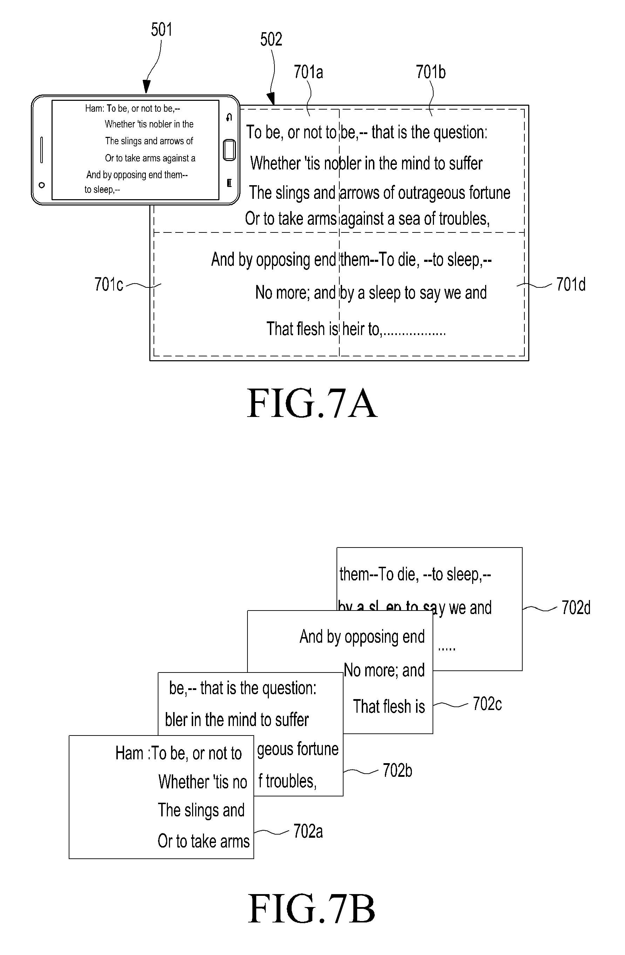

FIG. 4 is a flowchart of an image processing method, according to the embodiment of the present disclosure, FIG. 5A is a diagram that illustrates relationship between an object (for example, a book) and the electronic device 100 to be used for the image processing method, according to the embodiment of the present disclosure, FIG. 5B illustrates a page image to be used with respect to the image processing method, according to the embodiment of the present disclosure, FIGS. 6A to 6J illustrate user interfaces provided with respect to the image processing method, according to the embodiment of the present disclosure, and FIGS. 7A to 7K illustrate a method of the image processing method, according to the embodiment of the present disclosure.

First, in the embodiment of the present disclosure, the image processing method may enable users with relatively poor vision compared with typical users of such electronic devices to more easily read text included in an object (e.g., printed materials, such as newspapers, books, etc.). For example, as shown in FIG. 5A, the electronic device 501, implementing the electronic device 100 in FIGS. 2-3B, takes a picture of a book 503 including at least one page 502 and offers an environment that may improve readability of the text 504 present in the page 502 so that a user of the electronic device 501 may easily read the text 504.

Referring to FIG. 4, the image processing method includes starting to run an reading-enlargement application in step S401, receiving a page image in step S402, obtaining a text object image from the page image in step S403, and displaying the text object image to fit to a display environment in step S404. After step S404 is performed, the method of FIG. 4 ends.

Step S401 may be performed when an input event, requesting to run the reading-enlargement application for the image processing method, occurs through a UI, such as a default user interface (UI) provided by an operating system (OS) of the electronic device 501. For example, the input event of requesting to run the reading-enlargement application may occur by touching an icon on the screen of the display unit 190 shown in FIG. 3A that identifies and corresponds to the reading-enlargement application.

Furthermore, in step S401, a sound file may be reproduced to inform the user that the reading-enlargement application has just begun or to prompt the user input, in order for the user to use the reading enlargement application more easily.

In step S402, the electronic device 501 receives the page image, which is data resulting from imaging of the whole or a part of an object (e.g., a printed material, such as a book or a newspaper). For example, the page image may be obtained by capturing at least one page 502 of the book 503 with a camera module (e.g., the camera module 150 of FIG. 2) of the electronic device 501. The page image may also be obtained and stored beforehand by capturing or scanning the object. The page image may also be received (or downloaded) from an external source via a mobile communication module (e.g., the mobile communication module 120 of FIG. 2) or a sub-communication module (e.g., the sub-communication module 130 of FIG. 2), or captured by a multimedia module (e.g., the multimedia module 140 of FIG. 2).

In step S403, an area in which the text 504 in the upper portion of FIG. 5A is included is identified from the page image and is cut or otherwise extracted from the overall page image to be a text object image 505 displayed or displayable on the screen of the electronic device 501. The text object image 505 may have a rectangular shape, such as a square shape, or other shapes, and includes at least one of a letter, a number, a punctuation mark, a symbol, etc., or combinations thereof. The term "cut" may refer to cropping, editing, distinguishing, or otherwise obtaining a portion of the page image. In step S403, the method generates an arrangement sequence, as shown in the lower portion of FIG. 5A, in which the text object image 505 is placed into a linear series of a plurality of text object images in the electronic device 501. In the embodiment, the image processing method may optionally not directly recognize the text 504 present in the page image (i.e., extract the letters and convert the extracted letters into a text format) and provide the recognized letters to the user by re-displaying the letters. In general, numerous steps perform the direct recognition and re-displayed letters. In the process of directly recognizing and re-displaying letters, an error may occur when a letter is not correctly recognized, thus providing a different letter than the original letter present in the page image and causing inconvenience to the user. Therefore, step S403 is not a step of recognizing the letter present in the page image but is a step of detecting an area (a part of the page image) where the letter is present as an independent object (i.e., text object) and cutting (or distinguishing) the independent object as a text object image. The cut-off (or distinguished) text object image has an image attribute as a part of the page image. For example, the image attribute may indicate that the page image and the cut-off text object image are both in JPEG format, PDF format, or other predetermined image formats. Thus, it is unnecessary to convert the image attribute to a text attribute in obtaining the text object image, for example, with the text attribute indicating that obtained text such as letters generated by optical character recognition (OCR) are in Unicode format, ASCII format, or other predetermined text formats. In other words, in step S403, the step of directly recognizing letters is not necessary because the electronic device 501 converts the image attribute to the text attribute. Thus, an apparatus (also referred to an electronic device) for performing the method according to the embodiment of the present disclosure does not require high-performance hardware for directly recognizing the text, such as by OCR, thus resolving the problem of causing a delay in performing the step of directly recognizing the text and preventing inconvenience to the user from a wrong recognition of the text.

Furthermore, the image processing method may further include storing the text object image, in step S403'. In step S403', the electronic device 501 may store the cut-off (or distinguished) text object image by reflecting its place in the arrangement sequence, shown in the lower portion of FIG. 5A. Although illustrated to be an independent step in FIG. 4, step S403' may be incorporated into step S403 and processed simultaneously with step S403.

In step S404, using the location of the arrangement sequence 506 on the screen of the display unit 190, and magnification ratio of the text object image, the electronic device 501 displays the text object image on the display unit. Also, in response to a user input, the electronic device 501 may control to display the text object image on the display unit by changing or moving the text object image or changing the magnification ratio of the text object image. For example, the user input may include a touch-based drag gesture, a flick gesture, a swipe gesture, or a pinch zoom gesture, or a motion-based tilting gesture of the electronic device 501, a rotating gesture, or a moving gesture, etc. The user input may also be a button-based input or keypad-based input. The electronic device 501 may control to display the text object image on the display unit by changing or moving the text object image based on a moving direction and a moving distance of the user input. Thus, by performing step S404, the user may enjoy reading more stably and conveniently by a simple input to move or change the text object image. The electronic device 501 may also control the number or magnification ratio of the text object images to be displayed on the display unit based on the moving direction and the moving distance of the user input. Thus, the user may change reading conditions of the text 504 present in the page 502 of the book 503 in various ways, and in particular, may see the text 504 in a relatively enlarged size compared with its original size by viewing modified versions of the text object image 505.

Next, step S402 of receiving the page image is discussed in more detail.

First, the page image is data resulting from imaging the whole or a part of an object (e.g., a printed material, such as a book or a newspaper), which may be an image captured by the camera module of the electronic device 501, an image stored beforehand as a result of capturing or scanning of the object, an image received (or downloaded) from an external source via the mobile communication module 120 or the sub-communication module 130, or an image captured by the multimedia module 140.

In a case in which the page image is captured by the camera module 150 of the electronic device 501, the electronic device 501 obtains the page image by controlling the camera module 150 to capture the page 502 having the text 504. The page image may be an image obtained by capturing the page 502 all at once, shown as the image 510 of FIG. 5B, an image obtained by capturing a partial area of the page 502 at one time, shown as the image 530 of FIG. 5B, or an image obtained by dividing the entire page 502 or a part of the page 502 into predetermined sections, capturing the sections, and re-displaying an image 520 of FIG. 5B by combining the captured images (that is, 'source images') of the sections 521, 522, 523, 524 of FIG. 5B. In re-displaying the image 520 by combining the source images 521, 522, 523, 524, the electronic device 501 identifies an overlapping section from the plurality of source images 521, 522, 523, 524 and attaches the source images 521, 522, 523, 524 into the single page 520. A panorama technique may be employed to attach the plurality of source images 521, 522, 523, and 524 in a panorama image format.

Furthermore, the page image may be an image 540 or an image 550 of FIG. 5B resulting from the image from a cut-off of an area in which text is present, obtained by capturing the text image object by using image properties of the object.

The step of capturing the page 502 in step S402 to display the page image may be performed to an extent that at least the text area included in the page 502 may be detected in order to smoothly perform the subsequent step S403 of obtaining the text object image. Thus, to enable the user to capture the page 502 more correctly, a capture guide UI may be provided to guide page capturing, in step S402. For example, as shown in FIG. 6A, the capture guide UI may display information, such as a countdown with numerical text messages showing "3", "2", and "1", and a message such as "START CAPTURING", that informs a point in time for the user to start capturing. Alternatively or in addition, a sound file may be reproduced as outputted audible sounds from the speaker 163, such as an audible voice countdown, to inform the user of the point in time to start capturing while the capture guide UI operates.

Additionally, in step S402, using a color of the text 504 included in the page 502, a background color of the page 502, or color contrast of the text (letters) and the background, the electronic device 501 may control the camera to focus on the area where the text 504 is present, or provide the capture guide UI for the user to manipulate the electronic device 501 to adjust a focus.

The capture guide UI may include guide information to guide the user to check the quality of the captured image, the size of the text object image included in the image, etc., in real time and to capture the image to have a quality level, such as a quality above a predetermined level, or to have a size as large as the text object image which is greater than a predetermined threshold. For example, the capture guide UI may include information to guide recapturing of the object to ensure the captured image has a quality above a predetermined level.

The capture guide UI may also include information to guide the distance between the electronic device 501 and the object, such as the book 503, or information to guide adjustment of the capturing quality in order to ensure the size of the text object in the captured image to be greater than a predetermined threshold.

The electronic device 501 may display the page image 540 by combining source images obtained by capturing the object into a predetermined number of sections (e.g., 2 to 4 sections of up, down, left, and right or of top, center, and bottom), as shown in FIG. 5B and described in greater detail referring to FIG. 7A.

For example, as in FIG. 7A in which the object (e.g., the page 502) is captured into sections 701a, 701b, 701c, and 701d, oriented in the upper left, upper right, lower left, and lower right of the page 502, respectively, the electronic device 501 is first moved by the user to be positioned over sections 701a, 701b, 701c, and 701d, then captures the sections 701a, 701 b, 701c, and 701d, and generates corresponding source images 702a, 702b 702c, and 702d, respectively, as shown in FIG. 7B. The 701 a, 701b, 701c, and 701d of the page 502 may be automatically captured based on a moving state of the electronic device 501 or by pressing a capture button by the user.

In this regard, in capturing the source images, the electronic device 501 may provide the capture guide UI to guide the source images to have a quality above a predetermined level while providing a preview image input through the camera as in FIG. 6B. The capture guide UI may include information to guide a moving speed, a moving direction, a capturing area, a capturing frequency, etc. of the electronic device 501, or to guide recapturing of the object. In particular, the electronic device 501 may provide the capture guide UI to have information of a capturing direction, such as an image of an arrow superimposed on the preview image, as shown in FIG. 6B, to automatically capture the sections 701a, 701b, 701c, and 701d of the page 502 in a predetermined sequence.

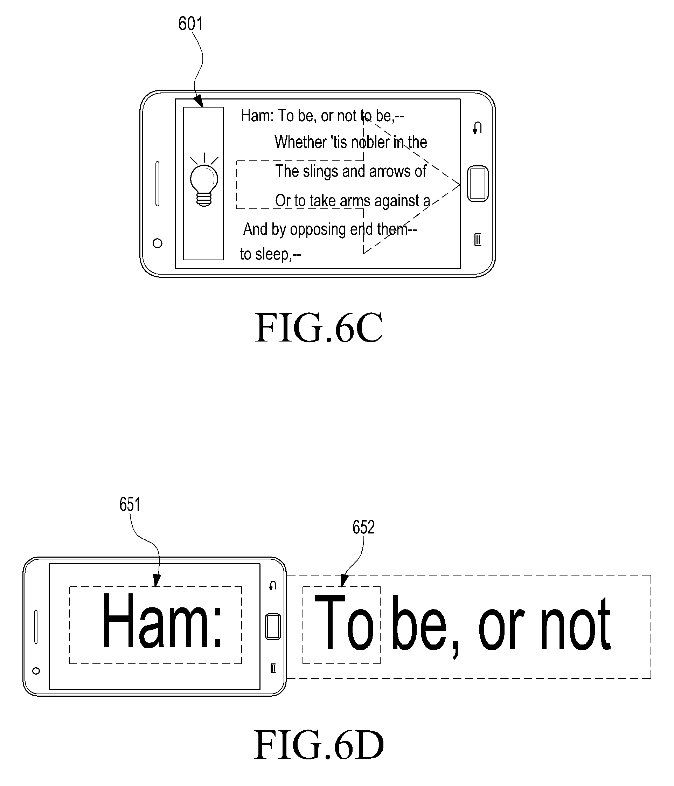

The capture guide UI may automatically control the flash included in the camera unit, or include a flash control button or icon 601 to control the flash to be on or off when touched by the user, as shown in FIG. 6C.

In the meantime, if the page image is stored in advance as a result of capturing or scanning the object, the electronic device 501 may offer an environment to import in the stored page image, in step 402. For example, the electronic device 501 may provide a list of page images as well as a menu or UI to select at least one page image. The page image may be stored in a storage equipped in the electronic device 501, or in a memory of an external device connected to the electronic device 501 via the mobile communication module or the sub-communication module. In the environment for importing the stored page image, the page image may be imported by selecting and downloading the page image stored in the memory of the external device connected through the mobile communication module 120 or the sub-communication module 130.

If the page image is captured via the multimedia module 140, the step 402 may be performed in the similar way to import and/or store the page image.

Next, the step S403 of obtaining the text object image will be described in more detail.

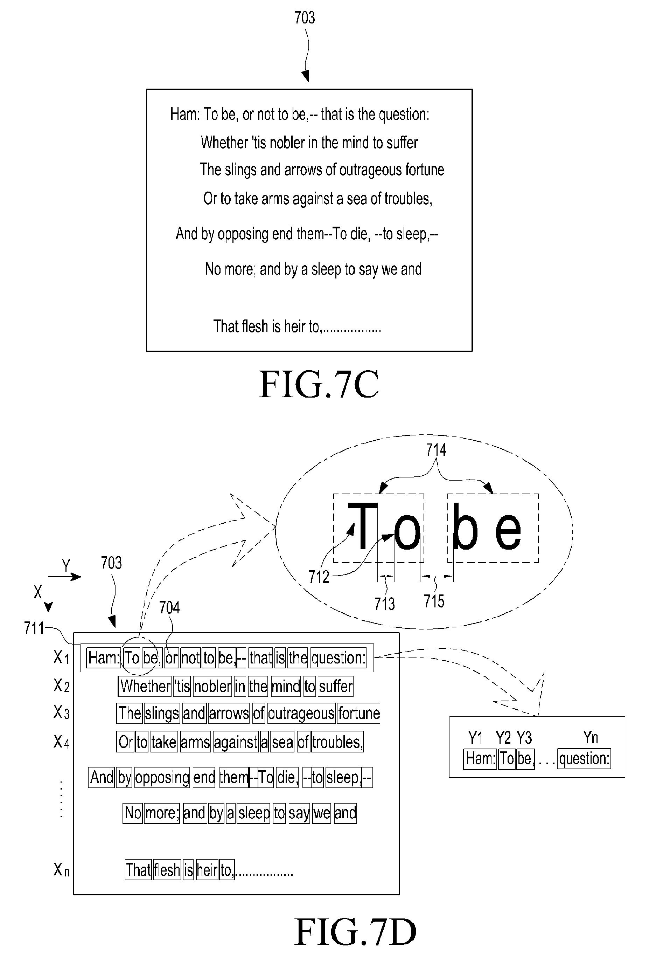

Referring to FIG. 7D, text is generally written successively and/or in a sequence in a particular direction on the page 502, or written in a certain range with respect to a predetermined reference line, with a predetermined space (first space) 713 being positioned adjacent to a letter 712, which may include being positioned between letters 712 and another predetermined space (second space) 715 being sized to be wider than the first space 713 to distinguish words 714. Using such aspects of the text, a step of cutting the text object image from the page image 703, obtained in step S402, is performed in step S403.

In step S403, instead of being a step of recognizing letters present in a page image 703, as shown in FIG. 7C, as a text format, a step of detecting an area where at least one letter is present in the page image 703 as an independent object (i.e., text object) and cutting the detected independent object from the page image 703 is performed. For example, in step S403, a step of cutting a text object image 711 out of the page image 703 is performed. Thus, by performing step S403, a problem in the related art that requires high-performance hardware or time delay in processing steps, to recognize letters as a direct text format from the image format, may be resolved, and user inconvenience caused by wrong recognition of letters may be prevented.

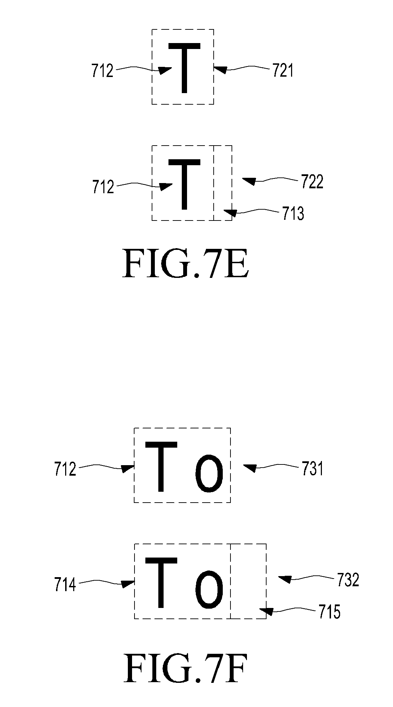

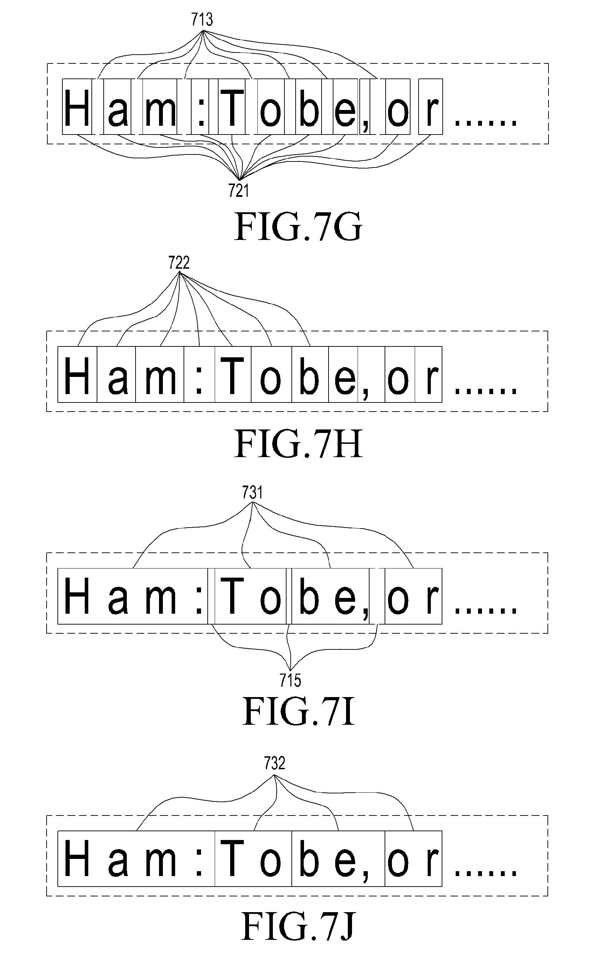

Furthermore, in step S403, in performing the step of cutting the text object image, the text object image may be cut on a letter basis or on a word basis by using an arrangement relationship between letters 712 as in FIG. 7E, or arrangement relationship between words 714 as in FIG. 7F. In performing the step of cutting the text object image, as shown in FIG. 7E, and using the first space 713 positioned adjacent to a letter 712, which may include being positioned between letters, an area where a letter 712 is present is cut as a text object image 721, or the area having the letter 712 and the first space 713 may be cut together as a text object image 722. Similarly, as shown in FIG. 7F, using the second space 715 positioned adjacent to a word, which may include being positioned between words, an area 714 where a word is present is cut as a text object image 731, as shown in FIG. 7G, or the area 714 and the second space 715 may be cut together as a text object image 732, as shown in FIG. 7H. Also, the text object image may be an image including a set of a predetermined number of letters, an image including a set of words, or an image in a predetermined size that belongs to a single line.

In order for the text object image to be displayed in step S404, arrangement information of the text object image is used. Thus, in step S403, the electronic device 501 may obtain the text object image as well as its arrangement information.

For example, as illustrated in FIG. 7D, the electronic device 501 may represent the arrangement information of the text object image in two dimensional XY coordinates by setting up the place of the line as an X-coordinate value and the place of the text object image in the line as a Y-coordinate value. Specifically, the electronic device 501 may represent the arrangement information of a text object image 704 as a coordinate value (0, 3). With the arrangement information of a two dimensional coordinate value, the electronic device 501 may easily identify the place of a text object positioned in the beginning or end of each line or its adjacent line.

In a case in which the electronic device 501 cuts off text object images from a plurality of page images, the electronic device 501 may further insert information of an order of the page images into the arrangement information. For example, the electronic device 501 may display the arrangement information to include a three dimensional (X, Y, Z) value by extending the two dimensional coordinate (X, Y) domain to have a Z-coordinate value set up for the place of a page to which the text object image belongs.

Although, in the embodiment of the present disclosure, the arrangement information of a text object image is represented in a two dimensional coordinates in a page image, or represented in a three dimensional coordinates among the plurality of page images, the present disclosure is not limited thereto and may be changed and used in various ways. For example, the arrangement information of each text object image may have an one dimensional value by sequentially assigning a sequential value to the text object image, and additionally, as values are sequentially assigned for a plurality of pages to identify each page among the plurality of pages including text object images, the arrangement information of each text object image may have a two dimensional value having a value assigned for the page among the plurality of pages and a value for the text object image based on its arrangement sequence.

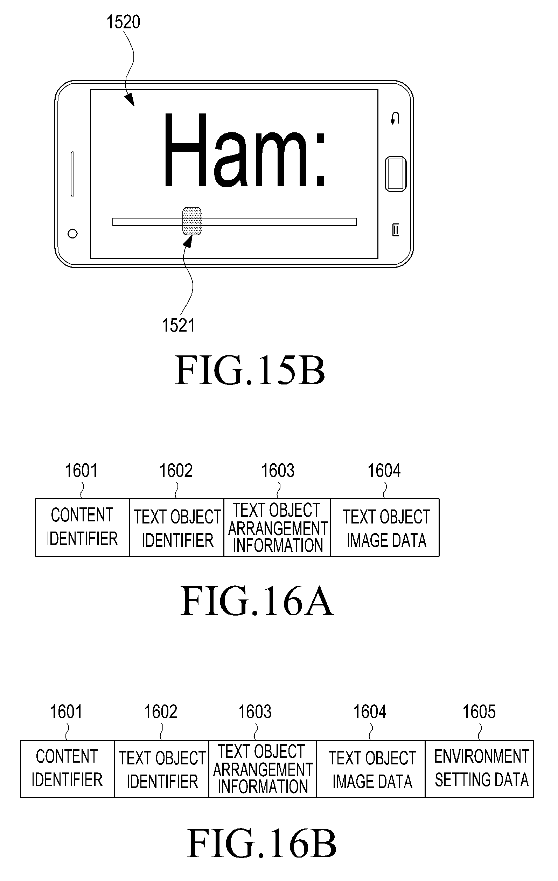

Additionally, in step S403, the text object image may be a reading content and stored in a predetermined file format, which will be described in more detail in connection with FIGS. 16A-16E.

Next, the step S404 of displaying the text object image at the electronic device 501 will be described in more detail.

In step S404, using the image size for display, the electronic device 501 may access a storage 175 to read out, import, or otherwise obtain at least one text object image to be displayed on the display unit 190. For example, the electronic device 501 may read out at least one text object image to be currently displayed on the display unit 190 depending on user inputs. Further, to display the text object image on the display unit by responding more quickly to a user input, the electronic device 501 may early read out a text object image arranged adjacent to a text object image to be currently displayed, i.e., at least one text object image arranged before the text object image to be currently displayed or at least one text object image arranged after the text object image to be currently displayed.

The cut-off text object image in step S403 may be an image cut on a letter basis or on a word basis, and include an area where a letter is present or include the area where the letter is present with a predetermined space (e.g., the first space 713 in FIG. 7E and 7G, or the second space 715 in FIGS. 7F and 7I). Thus, in step S404, the electronic device 501 displays the text object image on the display unit using a demarcation criterion between text object images, and thus may control where to display the text object image cut in previous step S403 based on the demarcation criterion between text object images, as illustrated in FIGS. 7G to 7K.

Specifically, if the cut-off text object image includes an area where a letter is present, the electronic device 501 may control such text object images 721 in FIG. 7G displayed on the letter basis to be displayed such that predetermined spaces (e.g., the first spaces 713) exist which are positioned adjacent to a letter or text object image 721, and which may include being positioned between text object images 721, as shown in FIG. 7G. If a cut-off text object image includes an area where a letter is present and the first space 713, the electronic device 501 may control such text object images 722 to be displayed successively, for example, one at a time in a sequence, as in FIG. 7H, such that the sequential display of text object images 722 corresponds to the order of letters, words, spaces, and punctuation of the original page image. Similarly, if the cut-off text object image includes an area where a word is present, the electronic device 501 may control such text object images 731 on the word basis to be displayed such that predetermined spaces (e.g., the second spaces 715) exist which are positioned adjacent to a text object image, which may include being positioned between the text object images 731, as shown in FIG. 7I. In addition, if a cut-off text object image includes an area where a word is present and the second space 715, the electronic device 501 may control such text object images 732 to be displayed successively and/or in a sequence, as in FIG. 7J.

The text object images displayed successively and/or in a sequence may also be displayed on a predetermined unit basis. The predetermined unit may include a line unit, a paragraph unit set up based on an indent or an outdent, or a predetermined length unit on the page image.

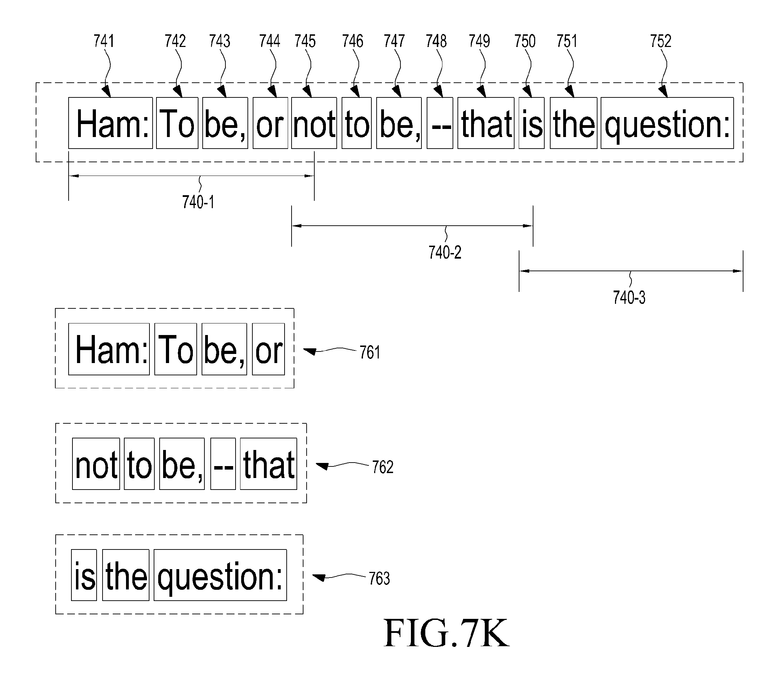

FIG. 7K illustrates a case in which the predetermined unit is the predetermined length unit. Referring to FIG. 7K, the electronic device 501 may display at least one text object image included within the predetermined length as one unit. Specifically, the text object images 741 to 744 fully included within a first predetermined length 740-1 may be a first unit 761, and a text object image 745 partially included in the first predetermined length 740-1 is excluded from the first unit 761. The electronic device 501 displays the text object images fully included within a second predetermined length 740-2 from the text object image 745 not included in the first predetermined length 740-1 to a text object image 749 as a second unit 762, but excludes a text object image 750 partially included in the second predetermined length 740-2 from the second unit 762. Similarly, the electronic device 501 displays the text object images 750 to 752 included in a third predetermined length 740-3 as a third unit 763.

Although text object images may be classified based on predetermined lengths, the disclosure is not limited thereto and may be changed in various ways. For example, in classifying text object images on a predetermined length basis, although the text object images 745, 750 partially included in predetermined lengths were not included in respective units, such text object images 745, 750 may be determined to be included in the respective units, or may be cut out for a predetermined length unconditionally regardless of whether the text object images are fully included.

Also, in step S404, the electronic device 501 may display the text object image on the display unit in response to a user input.

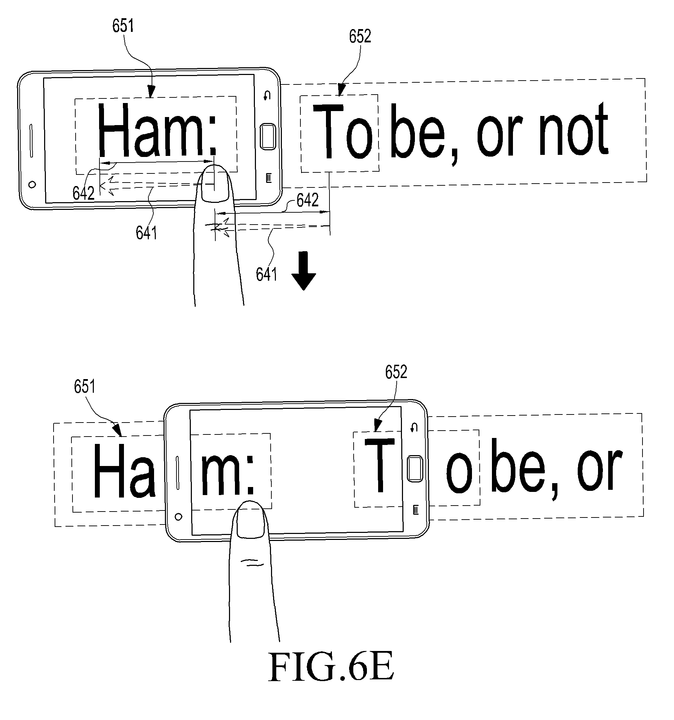

The electronic device 501 may display the text object image by adjusting the number of lines across which the text object images are displayed, the magnification ratio (size) for displaying the text object image, etc., to a display environment of the electronic device 501 and user settings. For example, the electronic device 501 may adjust the size of the text object image for display such that a line of text object images 651 may be shown on the display unit, as illustrated in FIG. 6D. Also, the electronic device 501 may display the text object image in response to a user input. For example, as illustrated in FIG. 6E, if a drag gesture is input by a touch on the display unit, the electronic device 501 may control a text object image (N^{th} image) 651 to be moved in the direction of the drag gesture 641 by a moving distance 642 while controlling a text object image ((N- 1)^{th} image) arranged before the text object image (N^{th} image) 651 or a text object image ((N+1)^{th} image) 652 arranged after the text object image (N^{th} image) 651 to be moved along with the text object image (N^{th} image) 651 in the direction of the drag gesture 641 by the moving distance 642 and displayed.

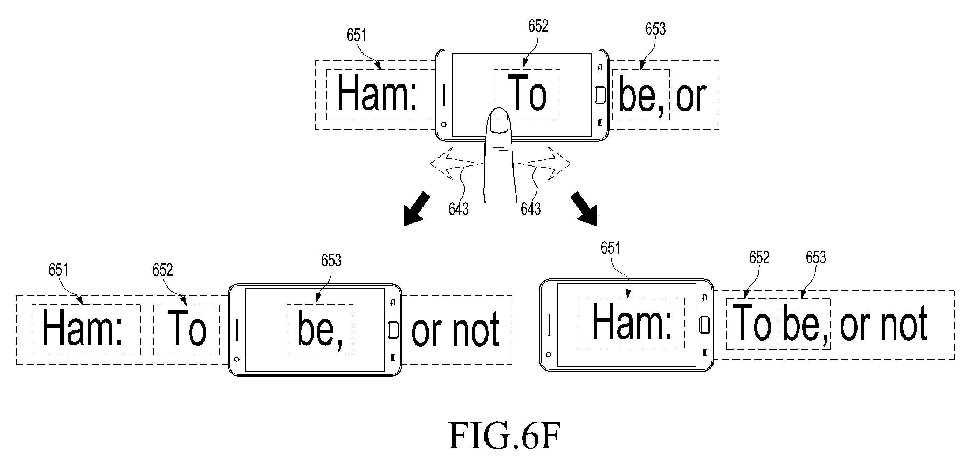

Also, as illustrated in FIG. 6F, if a flick gesture (or a swipe gesture) is input, the electronic device 501 may control a text object image (N^{th} image) 652 to be moved from the display unit in the direction of the flick gesture or the swipe gesture 643 and replaced by the text object image ((N-1)^{th} image) 651 arranged before the text object image (N^{th} image) 652 or a text object image ((N+1)^{th} image) 653 arranged after the text object image (N^{th} image) 652 on the display unit.

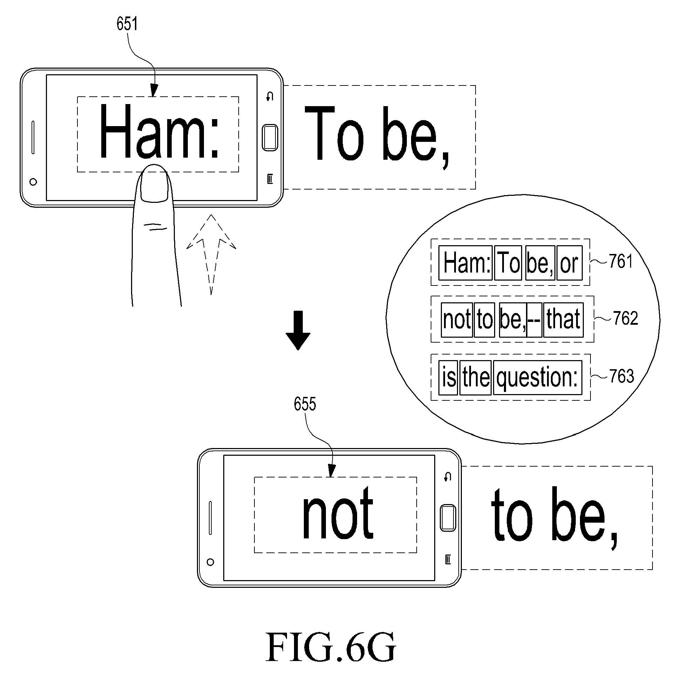

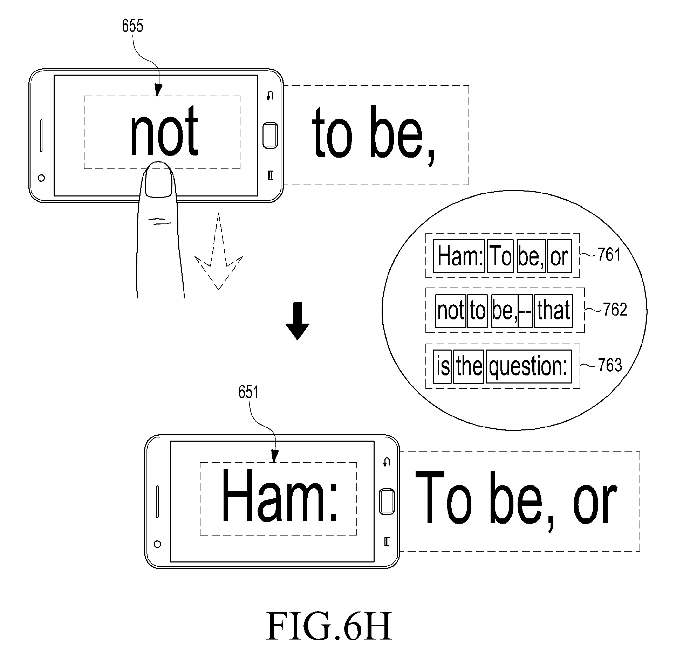

Furthermore, the electronic device 501 may move a predetermined unit of text object images in response to a user input and display the result. For example, as illustrated in FIG. 6G, if a user input (e.g., a drag gesture, a flick gesture, or a swipe gesture, etc.) occurs in the upward direction, the electronic device 501 may move a currently displayed text object image 651 in the upward direction in response to the user input while moving and displaying a text object image 655 included in the next unit 762 arranged after the unit 761 having the currently displayed text object image 651. In an alternative embodiment, as illustrated in FIG. 6H, if a user input occurs in the downward direction, the electronic device 501 may move the currently displayed text object image 655 in the downward direction in response to the user input while moving and displaying the text object image 651 included in the previous unit 761 arranged before the unit 762 having the currently displayed text object image 652.

In the embodiment of the present disclosure, the predetermined unit is set to the predetermined length, but the present disclosure is not limited thereto. For example, the predetermined unit may be a line unit, a paragraph unit set up based on an indent, an outdent, periods, spaces, etc. on the page image. The electronic device 501 may move or change text object images on the unit basis, e.g., on a line basis, on a paragraph basis, etc. in response to the user input.

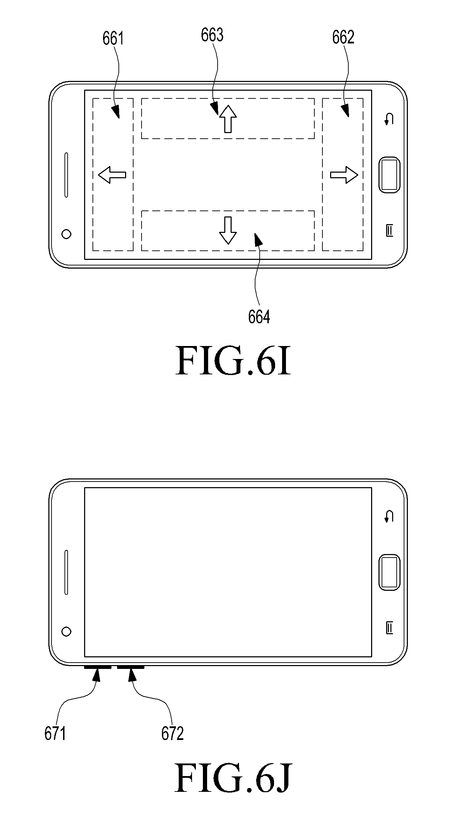

In FIGS. 6D to 6H, text object images are moved in response to the drag gesture, but the present disclosure is not limited thereto and allows any input for the user to move the text object image intuitively and conveniently. In this respect, as an alternative to moving the text object image in response to the drag gesture, an area may be set up in the display unit, as shown in FIG. 6I, to enable an intuitive recognition of movement of the text object image, and if a touch input occurs on the area, a text object image is moved and displayed in a direction that corresponds to the touch input. For example, if a user touches a first area 661 which is on the left of the display unit, a text object image is moved in the left direction and displayed; if the user touches a second area 662 on the right of the display unit, a text object image is moved in the right direction and displayed; if the user touches a third area 663 on the top of the display unit, text object images are moved in the upward direction and a text object image belonging to a next unit arranged after a unit having a currently displayed text object image is displayed; and if the user touches a fourth area 664 on the bottom of the display unit, text object images are moved in the downward direction and a text object image belonging to a previous unit arranged before a unit having a currently displayed text object image is displayed.

In an alternative embodiment, if a volume key button equipped in the electronic device 501 is pressed, the text object image may be moved and displayed in a direction that corresponds to the volume key button as in FIG. 6J. In this case, the moving direction of the text object image may be determined based on a holding time of the pressure of any of volume key buttons 671 and 672, which may correspond to the volume keys 161e and 161g, respectively, in FIG. 3B. Specifically, if the pressure of any of the volume key buttons 671 and 672 holds for more than a first period of time, a text object image is moved in the left or right direction depending on the selected one of the volume key buttons 671 and 672 and displayed; and if the pressure of any of the volume key buttons 671 and 672 holds for more than a second period of time, a text object image is moved in the upward or downward direction depending on the selected one of the volume key buttons 671 and 672 and displayed.

In a further alternative embodiment, in response to a motion-based tilting gesture of the electronic device 501, a rotating gesture, or a moving gesture, the electronic device 501 moves or changes a text object image to be displayed on the display unit.

The electronic device 501 may sequentially display all the text object images included in a page image from beginning to end, by controlling the text object images to be successively displayed and/or displayed according to a sequence in response to the user input. In other words, as shown in FIGS. 5A-5B where a text object image (N^{th} image) is currently displayed on the display unit, which is positioned at the end of the first line (e.g., 'question'), if a user input (e.g., a drag gesture, a flick gesture, a swipe gesture, etc.) occurs in the right to left direction, the electronic device 501 may move or change the (N+1)^{th} image to be displayed, with the (N+1)^{th} image being an image including a text object image positioned in the beginning on the left of the second line, e.g., 'Whether'. Thus, the electronic device 501 may sequentially display all the text object images included in the page image from beginning to end by the same user input.

By performing step S404, the electronic device 501 allows the user to enjoy reading more stably and conveniently by a simple input to move text object images without e.g., moving the electronic device 501.

Step S404 may also display a mini-map function to support displaying of locations of text object images in a page image, and further provide a bookmark function to move to a location (of a text object) where the user designates within content, a resume function to resume content reproduction from a point at which content reproduction was stopped. For this, in the process of displaying the text object image at the electronic device 501 in step S404, a UI offering an environment to operate the mini-map function, the bookmark function, the resume function, etc., is displayed as well, and any of those functions may be activated by a user input through the UI.

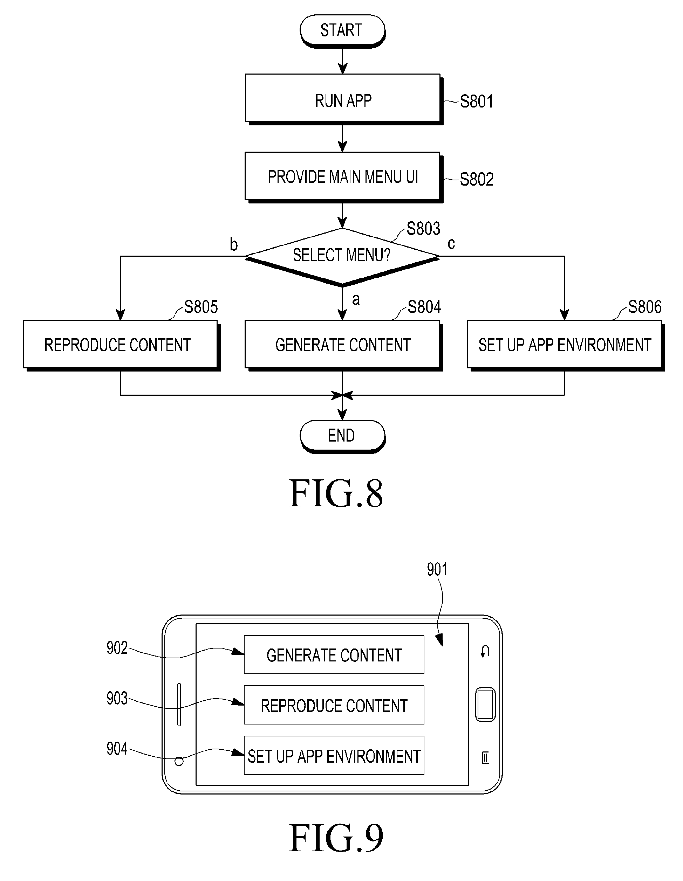

FIG. 8 is a flowchart of an image processing method, according to an alternative embodiment of the present disclosure, and FIG. 9 illustrates a main menu user interface 901 provided with respect to the image processing method, according to the alternative embodiment of the present disclosure.

First, referring to FIG. 8, the image processing method includes running a reading-enlargement application (also referred to as 'text-enlargement display' application) in step S801, providing a main menu UI by displaying such a main menu UI in step S802, and in response to a user input through the main menu UI, the steps S803 to S806 may be performed to execute the menu icons for user selections included in the main menu UI of FIG. 9, e.g., when the menu button or icon 902 to generate content is selected, the step S803 branches to option (a) to perform the step S804 to generate content; when the menu button or icon 903 to reproduce content is selected, the step S803 branches to option (b) to perform the step S805 to reproduce content; and when the menu button or icon 904 to set up an application environment is selected, the step S806 branches to option (c) to perform the step S806 to set up an application environment in which environment settings for the reading-enlargement application are selected or input by the user. After each of steps S804-S806 in FIG. 8 is performed, the method of FIG. 8 ends. The reading-enlargement application starts to run in response to a selection of the reading-enlargement application by the user, in step S801. With the reading-enlargement application running, the main menu UI 901 is presented on the display unit, in step S802. The main menu UI 901 provides a selection menu to operate basic steps of the reading-enlargement application. For example, the main menu UI 901 includes the content generation button 902 by which to perform the step of generating reading content in step S804, the content play button 903 by which to perform the step of reproducing the reading content in step S805, and the environment setting button 904 by which to perform the step of receiving settings for the reading-enlargement application in step S806.

If the content generation button 902 is selected by the user through the main menu UI 901 in step S803-a, the step of generating the reading content is performed in step S804; if the content play button 903 is selected in step S803-b, the step of reproducing the reading content is performed in step S805; and if the environment setting button 904 is selected in step S803-c, the step of receiving settings for the reading-enlargement application is performed in step S806.

The step of generating the reading content in step S804 is performed by cutting text object images from a page image input from a camera or a memory (e.g., the storage 175 in FIG. 2 and/or a memory embedded in the electronic device 501, or a memory residing in a server communicatively connected to the electronic device 501) by using properties of the text object images written on the page image, combining at least one text object image to form the reading content, and storing the reading content in a file format.

Step S804 is not a step of recognizing the text in the page image but is a step of detecting an area (a part of the page image) where at least one letter exists as an independent object (i.e., text object) and cutting (or distinguishing) the independent object as a text object image. The cut (or distinguished) text object image has an image attribute as a part of the page image. For example, the image attribute may indicate that the page image and the cut-off text object image are both in JPEG format, PDF format, or other predetermined image formats. Thus, it is unnecessary to convert the image attribute to a text attribute in obtaining the text object image, for example, with the text attribute indicating that obtained text such as letters generated by optical character recognition (OCR) are in Unicode format, ASCII format, or other predetermined text formats. In other words, in step S803, the step of directly recognizing a letter by converting the image attribute to the text attribute at the electronic device 501 is not performed. Thus, an apparatus (also referred to as the electronic device 501) for performing the method according to the embodiment of the present disclosure does not require high-performance hardware for directly recognizing the text, such as by OCR, thus resolving the problem of causing a delay in performing the step of directly recognizing the text and preventing inconvenience to the user from wrong recognition of the text.

The step of reproducing the reading content in step S805 includes adjusting the reading content generated in step S804 or received from an external source through communication to the environment of the electronic device 501 and the application and displaying the adjustment result, and implementing the reading content for the user to read text object images included in the reading content more conveniently. In particular, the step of reproducing the reading content in step S805 enables text object images contained in the reading content to be easily moved by a predetermined simple user input to the electronic device 501 (e.g., a touch-based drag gesture, a flick gesture, a swipe gesture, a pinch zoom gesture) without moving the electronic device 501, or a motion-based tilting gesture, a rotating gesture, or a moving gesture of the electronic device 501, etc.. The electronic device 501 may sequentially display all the text object images included in a page image from beginning to end, by controlling the text object images to be successively displayed and/or displayed according to a sequence in response to successive or subsequent user inputs.

The step of receiving settings for the reading-enlargement application in step S806 is performed to set up an environment to reproduce the reading content, and may set up modes for a user's vision (e.g., modes for the elderly, the disabled, etc.) and the magnification ratio of a text object image to be displayed on the display unit.

For a content generation step, content may be generated from a page image obtained by imaging at least one object (e.g., a printed material, such as a book, a newspaper, etc.). The page image may be an image stored beforehand as a result of capturing or scanning the object, an image received (or downloaded) from an external source through a mobile communication module or a sub-communication module, or an image captured through a multimedia module, however, in an alternative embodiment, the page image is illustrated as an image obtained by capturing the entire or a partial area of the object with the camera module.

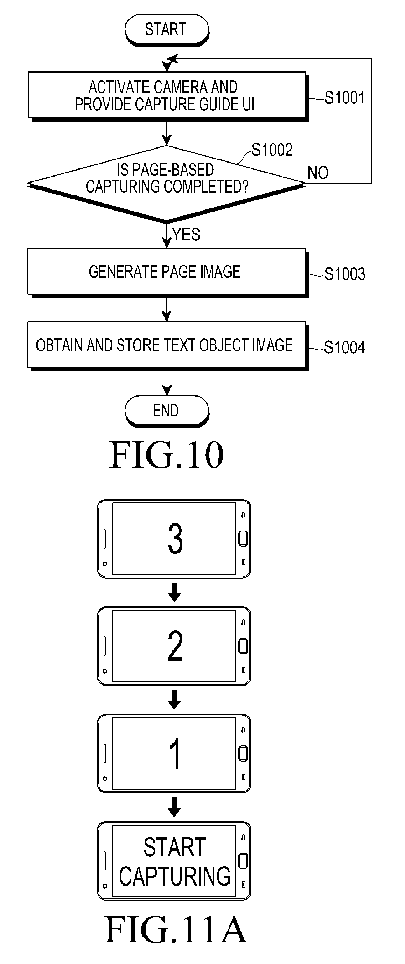

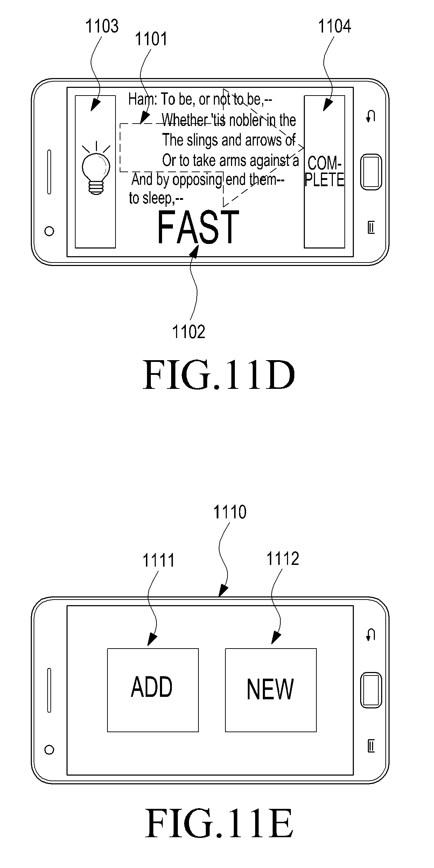

FIG. 10 is a flowchart of the detailed steps for performing step S804 of FIG. 8 in which content is generated, and FIGS. 11A to 11H illustrate user interfaces provided in step S804 of FIG. 8 where the content is generated.

In step S 1001, to generate content to be used in the reading-enlargement application, the electronic device 501 manages a camera operation, and displays image data input from the camera, such as either or both of the camera 151, 152, as a preview image and outputs the preview image through the display unit 190. The preview image may be displayed in a partial area or a full area of the display unit 190.

In step S1001, the electronic device 501 may display the capture guide UI, described for FIG. 6A and shown in FIGS. 6A and 11A, in at least a part of the display unit in order for the user to recognize that the camera has just been activated and recognize a point in time to start capturing a source image. For example, the capture guide UI may be display information, such as a countdown with numerical text messages showing "3", "2", and "1", and a message such as "START CAPTURING", to inform the user of the point in time to start capturing the source image, as shown in FIG. 11A. Alternatively or in addition, a sound file may be reproduced as outputted audible sounds from the speaker 163, such as an audible voice countdown, to inform the user of the point in time to start capturing while the capture guide UI operates.

The page image may be an image obtained by capturing the page 502 all at once, shown as the image 510 of FIG. 5B, an image obtained by capturing a partial area of the page 502 one time, shown as the image 530 of FIG. 5B, or an image obtained by dividing the entire page 502 or a part of the page 502 into predetermined sections, capturing the sections, and re-displaying an image 520 of FIG. 5B by combining images (that is, 'source images') of the sections 521, 522, 523, 524 of FIG. 5B.

In the case in which the page image is an image obtained by capturing the page 502 all at once, shown as the image 510 of FIG. 5B, or an image obtained by capturing a partial area of the page 502 one time, shown as 530 of FIG. 5B, the steps of capturing the page image should be performed to an extent that at least text area contained in the page 502 may be detected, so as to smoothly perform step S1004, where a text object image is obtained. Thus, using a color of the text 504 included in the page 502, a background color of the page 502, or color contrast of the text (letters) and the background, the electronic device 501 may control the camera to focus on the area where the text 504 is present, or provide the capture guide UI for the user to manipulate the electronic device 501 to adjust a focus. The capture guide UI may include guide information to guide the user to check the quality of the captured image, the size of the text object image included in the image, etc., in real time and to capture the image to have a quality, such as a quality above a predetermined level, or to have a size as large as the text object image which is greater than a predetermined threshold. For example, the capture guide UI may include information to guide the object to be recaptured such that the captured image has an image quality above a predetermined level, information to guide a distance between the electronic device 501 and the object such that a text object image contained in the captured image is in a size greater than a predetermined threshold, or information to guide adjustment of capturing quality.

In the case in which the page image is an image obtained by capturing the page 502 all at once, shown as the image 510 of FIG. 5B, or an image obtained by capturing a partial area of the page 502 one time, shown as the image 530 of FIG. 5B, page-based capturing may be completed by one image capture, so in step S1002, the electronic device 501 may automatically complete page-based capturing as an image having an image quality above the predetermined level has been obtained, and the method in FIG. 10 proceeds to step S1003. However, if the page-based capturing is not completed in step S1002, the method lops back to perform steps S1001-S1002 until the page-based capturing is completed.

In step S1003, a page image may be displayed using the image having the image quality above the predetermined level obtained in step S1001.

Although automatic completion of capturing the page image is illustrated, the disclosure is not limited thereto and may be changed in various ways. For example, the electronic device 501 may provide the capture guide UI including a capture-completion button and may complete capturing of the page image when the capture-completion button is pressed.

On the other hand, in the case in which the page image is the image 520 displayed by combining the source images 521, 522, 523, and 524, in step S1001, the electronic device offers an environment for capturing the object into predetermined sections (e.g., 2 to 4 sections, such as up, down, left, and right sections or top, middle, bottom sections), as shown in FIG. 5B and described in greater detail referring to FIG. 7A.

For example, as in FIG. 7A in which an object (e.g., the page 502) is captured into sections 701a, 701b, 701c, and 701d, oriented in the upper left, upper right, lower left, and lower right of the page 502, respectively, the electronic device 501 is first moved by the user to be positioned over sections 701a, 701b, 701c, and 701d, then captures the sections 701a, 701 b, 701c, and 701d, and generates corresponding source images 702a, 702b 702c, and 702d, respectively, as shown in FIG. 7B. The sections 701 a, 701b, 701 c, and 701 d of the page 502 may be automatically captured based on a moving state of the electronic device 501 or by pressing a capture button by the user.

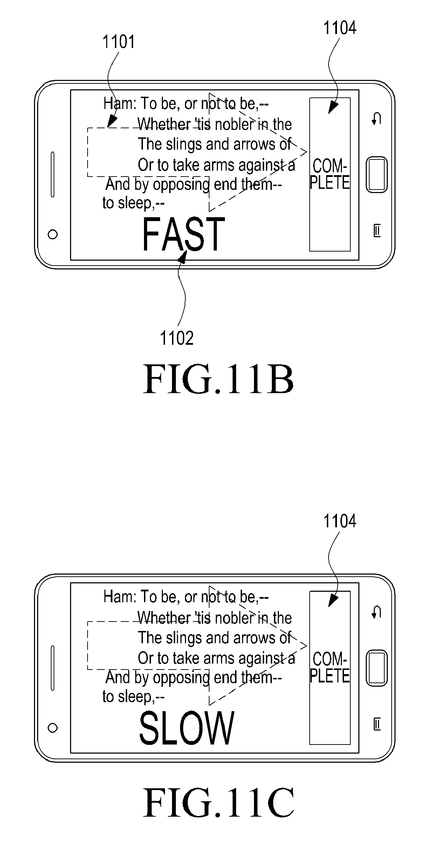

In this regard, in capturing the source images, the electronic device 501 may provide the capture guide UI to guide the source images to have a quality above a predetermined level while providing a preview image input through the camera as in FIGS. 11B and 11C. The capture guide UI may provide information to guide where and how many times capturing should be performed, or information to guide the object to be recaptured, and in particular, information of a moving direction, such as an image of an arrow 1101 superimposed on the preview images in FIGS. 11B-11D, and a moving speed such as a message 1102 with distinct size and/or colored text such as "FAST" or "SLOW" superimposed on the preview images in FIGS. 11B-11D, respectively, of the electronic device 501 for the sections 701a, 701b, 701c, and 701d of the page 502 to be automatically captured in a predetermined sequence. The electronic device 501 may also provide the capture guide UI to include the capture button 1104 in FIGS. 11B-11D for the user to manually capture a desired part of the page 502.

Furthermore, using the background color of the page image or color distribution of the text area, the electronic device 501 provides the capture guide UI to automatically control the flash included in the camera unit or to include a flash control button or icon 1103 for the user to control the flash to be on or off when pressed.

Image capturing may be performed on the object page by page. Thus, in step S1001 in FIG. 10, the electronic device 501 determines whether the page-based image capturing has been completed by using a value input through a built-in motion sensor (e.g., a gyro sensor, etc.). Alternatively, the electronic device 501 may provide the capture guide UI with a complete input button 1104, which may be the capture button, to indicate that image capturing has been completed, and in response to whether the complete input button 1104 has been pressed, determine whether the page-based image capturing has been completed.

Depending on the determination of whether the page-based image capturing has been completed in step S1002, step S1001 may be performed again, or the next step S1003 may be performed.

In step S1003, the electronic device 501 displays a page image with the source images 702a, 702b, 702c, and 702d obtained in step S1001. For example, the page image may be formed by combining the source images 702a, 702b, 702c, and 702d, shown in FIG. 7B, obtained by capturing, based on e.g., capturing positions of the source images 702a, 702b, 702c, and 702d moved in a predetermined direction or relative positions of the source images 702a, 702b, 702c, and 702d identified by the motion sensor equipped in the electronic device 501. A panorama technique may be employed to attach the plurality of source images 702a, 702b, 702c, and 702d in a panorama image format.

Furthermore, the page image may be an image 540 or 550 of FIG. 5B resulting from cut-off of an area in which the text is present from the image obtained by capturing the object by using image properties of the object.

Referring to FIG. 7D, letters are generally written successively and/or in a sequence in a particular direction on the page 502, or written in a certain range with respect to a predetermined reference line, with a predetermined space (first space) 713 being positioned adjacent to a letter 712, which may include being positioned between letters 712 and another predetermined space (second space) 715 being sized to be wider than the first space 713 to distinguish words 714. Using such aspects of the letters, in step S1004, the electronic device 501 cuts off the text object image from the page image 703 obtained in step S1003.

Furthermore, in step S1004, in performing the step of cutting the text object image, the text object image may be cut on a letter basis or on a word basis by using an arrangement relationship between letters 712 as in FIG. 7E, or arrangement relationship between words 714 as in FIG. 7F. Also, in performing the step of cutting the text object image, as shown in FIG. 7E, and using the first space 713 positioned adjacent to a letter, which may include being positioned between letters, an area where a letter 712 is present is cut as a text object image 721, or the area having the letter 712 and the first space 713 may be cut together as a text object image 722. Similarly, as shown in FIG. 7F, using the second space 715 positioned adjacent to a word, which may include being positioned between words, an area 714 where a word is present is cut as a text object image 731, as shown in FIG. 7G, or the area 714 and the second space 715 may be cut together as a text object image 732, as shown in FIG. 7H. The text object image may be an image including a set of a predetermined number of letters, an image including a set of words, or an image in a predetermined size that belongs to a single line.

In order for the electronic device 501 to display the text object image, arrangement information of the text object image is used. Thus, in step S1004, the electronic device 501 may obtain the text object image as well as the arrangement information.

For example, as illustrated in FIG. 7D, the electronic device 501 may represent the arrangement information of the text object image in two dimensional XY coordinates by setting up the place of the line as an X-coordinate value and the place of the text object image in the line as a Y-coordinate value. Specifically, the electronic device 501 may represent the arrangement information of the text object image 704 in a coordinate value (0, 3). With the arrangement information of a two dimensional coordinate value, the electronic device 501 may easily identify the place of a text object positioned in the beginning or end of a line or an adjacent line.

In a case in which the electronic device 501 cuts off text object images from a plurality of page images, the electronic device 501 may further insert information of an order of the page images into the arrangement information. For example, the electronic device 501 may display the arrangement information to include a three dimensional (X, Y, Z) value by extending the two dimensional coordinate (X, Y) domain to have a Z-coordinate value set up for the place of a page to which the text object image belongs.

Although, in the embodiment of the present disclosure, the arrangement information of a text object image is represented in a two dimensional coordinates in a page image, or represented in a three dimensional coordinates in the plurality of page images, the present disclosure is not limited thereto and may be changed and used in various ways. For example, the arrangement information of each text object image may have an one dimensional value by sequentially assigning a sequence value to each text object image, and additionally, as values are sequentially assigned for a plurality of pages to identify each page among the plurality of pages including text object images, the arrangement information of each text object image may have a two dimensional value having a value assigned for the page among the plurality of pages and a value for the text object image based on its arrangement sequence.

In step S1004, instead of being a step of recognizing letters present in the page image 703 as a text format, as shown in FIG. 7C, a step of detecting an area where at least one letter is present in the page image 703 as an independent object (i.e., text object) and cutting the detected independent object as a text object image from the page image 703 is performed. Thus, by performing step S1004, a problem in the related art that requires high-performance hardware or time delay in processing steps to recognize letters as a direct text format may be resolved, and user inconvenience caused by wrong recognition of letters may be prevented.

The electronic device 501 may store the text object image cut in step S1004 in the storage 175 to subsequently reproduce the content and may receive information used to store the text object image through a content storage UI.

In general, the content may be formed with at least one page image 703, and the page image 703 may include a plurality of text object images 711. The electronic device 501 may generate and store a content-based file, and the page image 703 and the text object image 711 may be included in the newly generated content or included in an existing content which was previously stored. Thus, in step S1004, the electronic device 501 may offer an environment in which to select whether the text object image should be stored by being incorporated into existing content or in newly generated content as in FIG. 11E, i.e., the electronic device 501 may provide the content storage UI 1110 with an 'add' button 1111 to incorporate the text object image to the existing content, and a 'new' button 1112 to incorporate the text object image to the newly generated content.

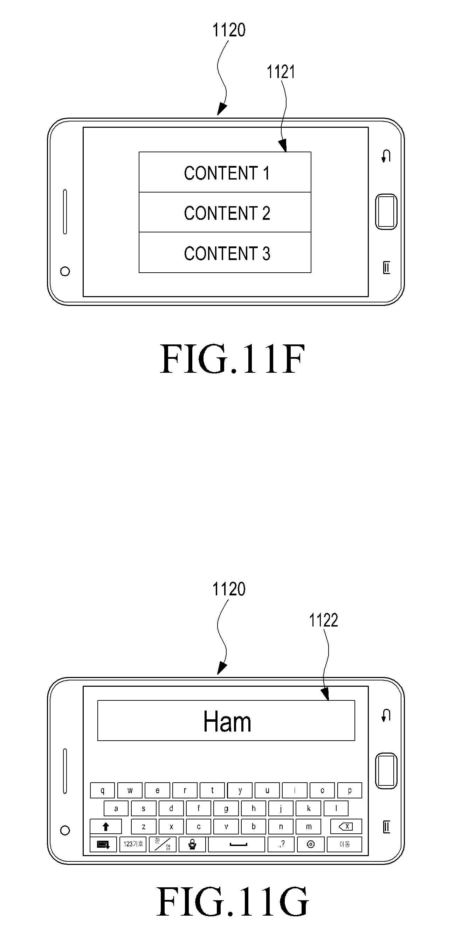

In response to selection of the add button 1111, the electronic device 501 may provide a list of existing contents 1121 and a content selecting UI 1120 as shown in FIG. 11F, for selecting any of the existing contents to perform the step of incorporating and storing the text object image in an existing. In addition, in response to selection of the 'new' button 1112, the electronic device 501 provides a content file name input UI 1122 as shown in FIG. 11G to receive a file name of newly generated content.

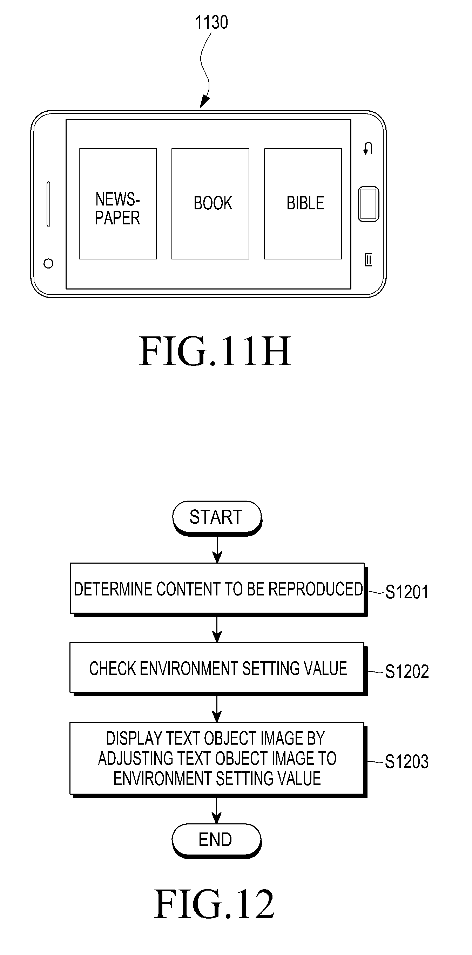

Additionally, after receiving a content file name through the content file name input UI 1122, the electronic device 501 may further provide a content type input UI 1130, as shown in FIG. 11H, for displaying a menu with a plurality of selectable icons, each of which has text such as "newspaper", "book", and "bible", with each icon representing a corresponding type of the content (e.g., a newspaper, a book, a bible, etc.) and for receiving an input of the content type upon a user selection of a specific selectable icon.

Furthermore, the content formed may be stored in a predetermined file format (e.g., text object file format) for efficient management of the text object image.

The embodiment of the disclosure has the page image formed with captured images by capturing the images with the camera equipped in the electronic device 501 in the process of generating the content. However, the present disclosure is not limited thereto, and the page image may be obtained to an extent that may cut the text object image. As an alternative to the method of obtaining the page image, the page image may be obtained from among images stored in a memory, e.g., the storage 175 and/or an internal memory of the electronic device 501 or a memory accessible by communication. Specifically, the page image may be obtained by combining (e.g., stitching or pasting) source images stored in the memory or an image stored in the memory may be obtained as the page image.

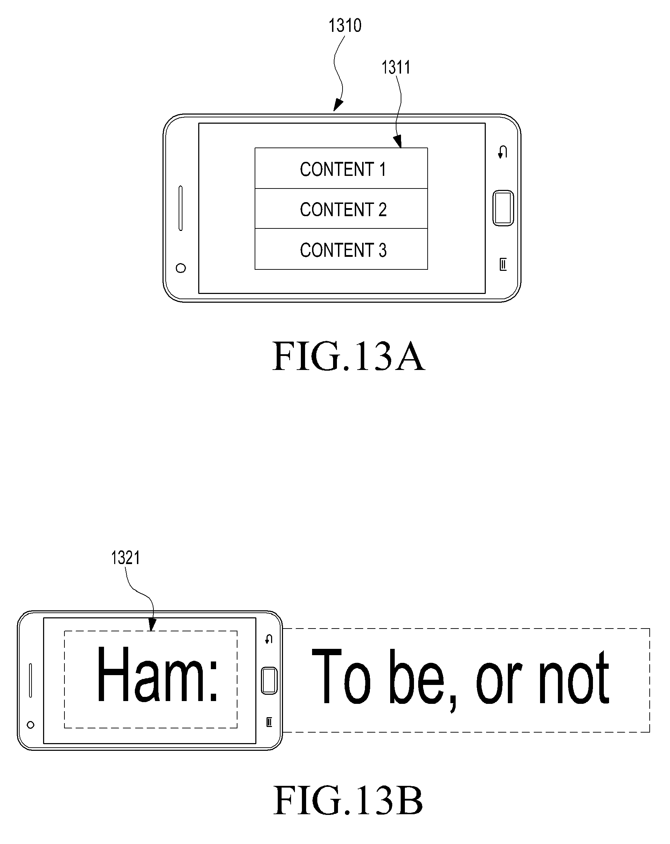

For a content reproduction operation, FIG. 12 is a flowchart of the detailed steps of reproducing content in step S805 of FIG. 8, and FIGS. 13A to 13H illustrate user interfaces provided in step S805 of FIG. 8 where the content is reproduced.

First, in step S1201, content to be reproduced is determined. For example, the electronic device 501 presents a list of contents 1311 stored beforehand which is displayed on a screen of the display unit of the electronic device 501 in a content selecting UI 1310, shown in FIG. 13A, for selecting content to be reproduced from the list 1311. The electronic device 501 may determine a content to be reproduced by receiving a selection of the content by the user through the content selection UI 1310.

Next, in step S1202, the electronic device 501 checks environment setting values for the reading-enlargement application. The environment setting values for the reading-enlargement application may include output conditions of the display unit (e.g., a display resolution), mode information (e.g., modes for the elderly, the disabled, etc.) for a user's vision, a magnification ratio of the text object image to be displayed on the display unit, etc.

In step S1203, the electronic device 501 adjusts the text object included in the content to comply with the environment setting values by adjusting the number of lines across which the text object image is displayed, the magnification ratio to display the text object image, etc., and displays the adjusted text object image. For example, the electronic device 501 may adjust the size of the text object image for display such that a line of text object images 1321 may be shown on the display unit, as illustrated in FIG. 13B. For such adjustment and displaying of text object images, the electronic device 501 may access the storage 175 and read out from the storage 175 at least one text object image to be displayed on the display unit. For example, the electronic device 501 may read out at least one text object image to be currently displayed on the display unit, depending on or in response to the user input, when an event occurs according to the user input. Further, the electronic device 501 may read out or obtain previously a text object image arranged adjacent to a text object image to be currently displayed, i.e., at least one text object image arranged before the text object image to be currently displayed or at least one text object image arranged after the text object image to be currently displayed, which may be stored temporarily in a memory buffer such as the RAM 113 of the controller 110 to reduce the time to generate and display successive text object images in the sequence of text object images. As such, the electronic device 501 may quickly respond to the user input and display the text object image on the display unit by early reading out an adjacent text object image to a text object image to be currently displayed.

The text object image may be an image cut on a letter basis or on a word basis, and include an area where a letter is present or include the area where the letter is present with a predetermined space (e.g., the first space 713 in FIGS. 7E and 7G, or the second space 715 in FIGS. 7F and 7I). Thus, the electronic device 501 displays the text object image on the display unit using a demarcation criterion between the text object images, and thus may control the text object image to be displayed based on the demarcation criterion. Specifically, if the cut-off text object image includes an area where a letter is present, the electronic device 501 may control such text object images 721 in FIG. 7G displayed on the letter basis to be displayed such that predetermined spaces (e.g., the first spaces 713) exist which may be positioned adjacent to a text object image, and which may include being positioned between text object images 721, as shown in FIG. 7G. If a cut-off text object image includes an area where a letter is present and the first space 713, the electronic device 501 may control such text object images 722 to be displayed successively and/or in a sequence, as in FIG. 7H. Similarly, if the cut-off text object image includes an area where a word is present, the electronic device 501 may control such text object images 731 on the word basis to be displayed such that predetermined spaces (e.g., the second spaces 715) exist which are positioned adjacent to a text object image, and which may include being positioned between the text object images 731, as shown in FIG. 7I. In addition, if a cut-off text object image includes an area where a word is present and the second space 715, the electronic device 501 may control such text object images 732 to be displayed successively and/or in a sequence, as in FIG. 7J.

The text object images arranged and displayed successively and/or in a sequence may also be displayed on a predetermined unit basis. The predetermined unit may include a line unit, a paragraph unit set up based on an indent or an outdent, or a predetermined length unit on the page image.

FIG. 7K illustrates a case in which the predetermined unit is a predetermined length unit. Referring to FIG. 7K, the electronic device 501 may display at least one text object image included within the predetermined length as one unit. Specifically, the text object images 741 to 744 fully included within a first predetermined length 740-1 may be as a first unit 761, and a text object image 745 partially included in the first predetermined length 740-1 is excluded from the first unit 761. The electronic device 501 displays the text object images fully included within a second predetermined length 740-2 from the text object image 745 not included in the first predetermined length 740-1 to a text object image 749 as a second unit 762, but excludes a text object image 750 partially included in the second predetermined length 740-2 from the second unit 762. Similarly, the electronic device 501 displays the text object images 750 to 752 included in a third predetermined length 740-3 as a third unit 763.

Although text object images may be classified based on predetermined lengths, the disclosure is not limited thereto and may be changed in various ways. For example, in classifying text object images on a predetermined length basis, although it the text object images 745, 750 partially included in predetermined lengths were not included in respective units, such text object images 745, 750 may be determined to be included in the respective units, or may be cut out for a predetermined length unconditionally regardless of whether the text object images are fully included.

Also, in step S1203, the electronic device 501 may display the text object image on the display unit in response to a user input. For example, as illustrated in FIG. 13C, if a drag gesture is input by a touch on the display unit, the electronic device 501 may control a text object image (N^{th} image) 1351 to be moved in the direction of the drag gesture 1341 by a moving distance 1342 while controlling a text object image ((N-1)^{th} image) arranged before the text object image (N^{th} image) 1351 or a text object image ((N+1)^{th} image) 1352 arranged after the text object image (N^{th} image) 1351 to be moved along with the text object image (N^{th} image) 1351 in the direction of the drag gesture 1341 by the moving distance 1342 and displayed.

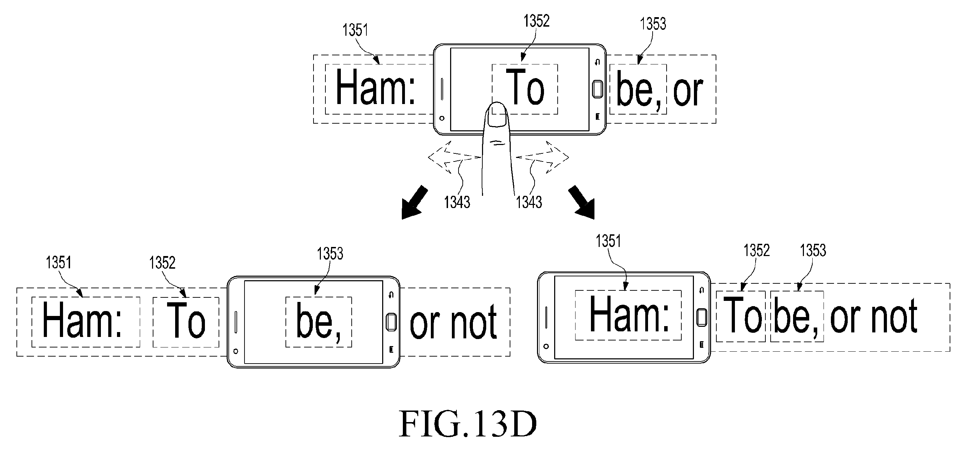

Also, as illustrated in FIG. 13D, if a flick gesture (or a swipe gesture) is input, the electronic device 501 may control a text object image (N^{th} image) 1352 to be moved from the display unit 190 in the direction of the flick gesture or the swipe gesture 1343 and replaced by the text object image ((N-1)^{th} image) 1351 arranged before the text object image (N^{th} image) 1352 or a text object image ((N+1)^{th} image) 1353 arranged after the text object image (N^{th} image) 1352 on the display unit.

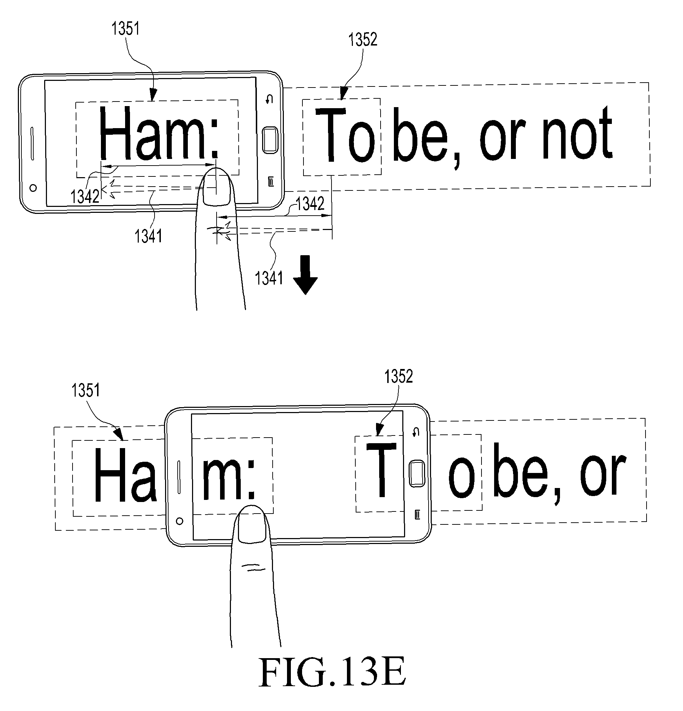

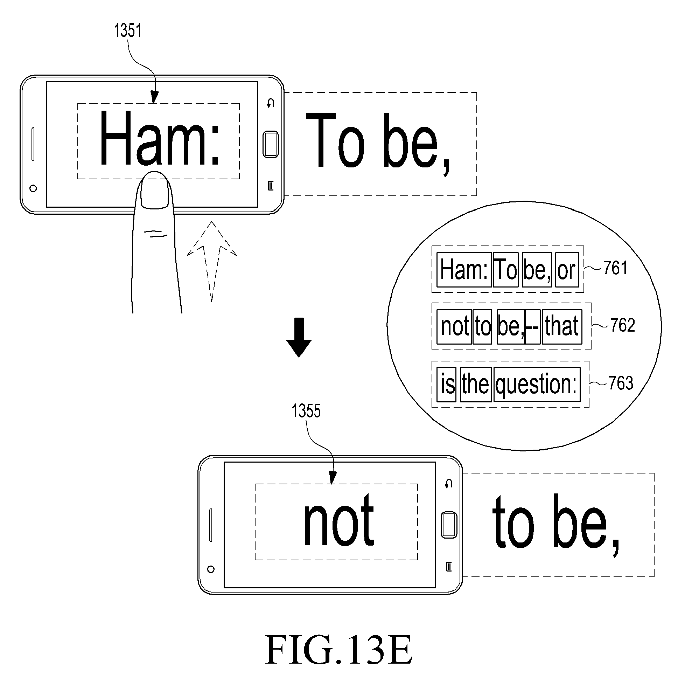

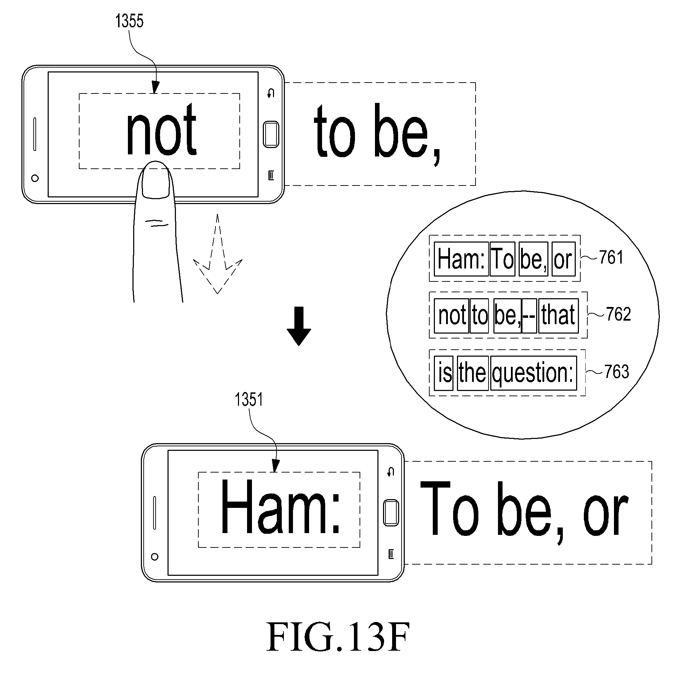

Furthermore, the electronic device 501 may move a predetermined unit of text object images in response to a user input and display the result. For example, as illustrated in FIG. 13E, if a user input (e.g., a drag gesture, a flick gesture, or a swipe gesture, etc.) occurs in the upward direction, the electronic device 501 may move a currently displayed text object image 1351 in the upward direction in response to the user input while moving and displaying a text object image 1355 included in the next unit 762 arranged after the unit 761 having the currently displayed text object image 1351. In an alternative embodiment, as illustrated in FIG. 13F, if a user input occurs in the downward direction, the electronic device 501 may move the currently displayed text object image 1355 in the downward direction in response to the user input while moving and displaying the text object image 1351 included in the previous unit 761 arranged before the unit 762 having the currently displayed text object image 1355.

In the embodiment of the present disclosure, the predetermined unit is set to the predetermined length, but the present disclosure is not limited thereto. For example, the predetermined unit may be a line unit, a paragraph unit set up based on an indent, an outdent, periods, spaces, etc. on the page image. The electronic device 501 may move or change text object images on the unit basis, e.g., on a line basis, on a paragraph basis, etc. in response to the user input.

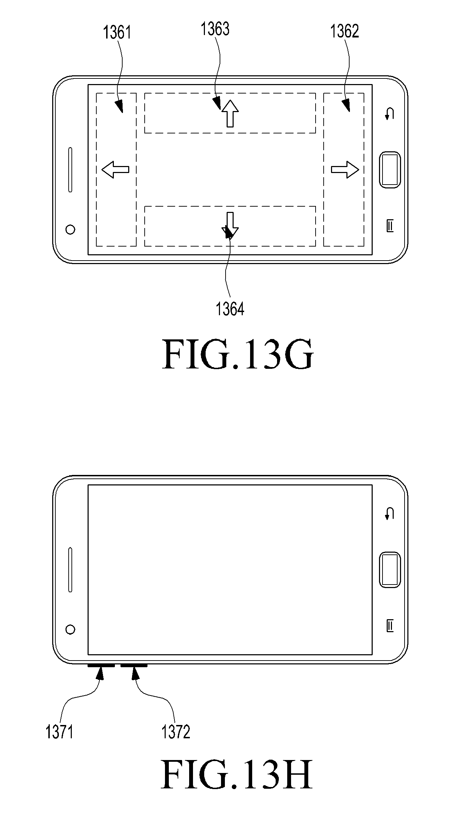

In FIGS. 13C to 13F, text object images are moved in response to a user input (e.g., a drag gesture, a flick gesture, a swipe gesture, etc.), but the present disclosure is not limited thereto and allows any input for the user to move the text object image intuitively and conveniently. In this respect, as an alternative to moving the text object image in response to the drag gesture, an area may be set up in the display unit, as shown in FIG. 13G, to enable an intuitive recognition of movement of the text object image, and if a touch input occurs on the area, a text object image is moved and displayed in a direction that corresponds to the touch input. For example, if the user touches a first area 1361 which is on the left of the display unit, a text object image is moved in the left direction and displayed; if the user touches a second area 1362 on the right of the display unit, a text object image is moved in the right direction and displayed; if the user touches a third area 1363 on the top of the display unit, text object images are moved in the upward direction and a text object image belonging to a next unit arranged after a unit having a currently displayed text object image is displayed; and if the user touches a fourth area 1364 on the bottom of the display unit, text object images are moved in the downward direction and a text object image belonging to a previous unit arranged before a unit having a currently displayed text object image is displayed.

In an alternative embodiment, if a volume key button equipped in the electronic device 501 is pressed, text object images may be moved and displayed in a direction that corresponds to the volume key button as in FIG. 13H. In this case, the moving direction of the text object image may be determined based on a holding time of the pressure of any of volume key buttons 1371 and 1372, which may correspond to the volume keys 161e and 161g, respectively, in FIG. 3B. Specifically, if the pressure of any of the volume key buttons 1371 and 1372 holds for more than a first period of time, a text object image is moved in the left or right direction depending on the selected one of the volume key buttons 1371 and 1372 and displayed; and if the pressure of any of the volume key buttons 1371 and 1372 holds for more than a second period of time, a text object image is moved in the upward or downward direction depending on the selected one of the volume key buttons 671 and 672 and displayed.

In step S1203, the electronic device 501 may adjust the number of lines across which the text object image is displayed on the display unit, the magnification ratio (size) to display the text object image, etc. in response to a user input and then display the text object image. For example, if a pinch gesture is input, the electronic device 501 may increase or decrease the number of lines across which the text object image is displayed, the magnification ratio (size) to display the text object image, etc. in response to a change in relative distance of the pinch gesture.

In an alternative embodiment, in response to a motion-based tilting gesture of the electronic device 501, a rotating gesture, or a moving gesture, the electronic device 501 moves, changes, expands, or reduces a text object image to be displayed on the display unit.

The electronic device 501 may control to display text object images in response to the user input. In particular, the electronic device 501 may sequentially display all the text object images included in a page image from beginning to end by a simple user input, by controlling the text object images to be successively displayed and/or displayed according to a sequence in response to the user input. In other words, as shown in FIGS. 5A-5B where a text object image (an N^{th} image) is currently displayed on the display unit, which is positioned at the end of the first line (e.g., 'question'), if a user input (e.g., a drag gesture, a flick gesture, a swipe gesture, etc.) occurs in the right to left direction, the electronic device 501 may move the (N+1)^{th} image to be displayed, with the (N+1)^{th} image being an image including a text object image positioned in the beginning on the left of the second line, e.g., 'Whether'. Thus, the electronic device 501 may sequentially display all the text object images included in the page image from beginning to end by the same user input.

By performing step S1203, the electronic device 501 allows the user to enjoy reading more stably and conveniently by a simple input to move the text object image without e.g., moving the electronic device 501.

Step S1203 may be repetitively performed until an input to stop content reproduction or an input to stop the reading-enlargement application is received. For example, such stop steps may be performed when a stop key is pressed by the user or based on an operating setting of the electronic device 501. The operating setting of the electronic device 501 may include a setting for maintaining a standby state or a deactivation state without displaying the reading-enlargement application on the display unit, or a setting of stopping a text input application if the non-displayed state of the reading-enlargement application on the display unit continues for a predetermined time.

Step S1203 may also display a mini-map function to support displaying of locations of text object images in a page image, and further provide a bookmark function to move to a location (of a text object) where the user designates within the content, a resume function to resume content reproduction from a point at which content reproduction was stopped. For this, in the process of displaying the text object image at the electronic device 501 in step S1204, a UI offering an environment to operate the mini-map function, the bookmark function, the resume function, etc., is displayed as well, and any of those functions may be activated by a user input through the UI.

In the meantime, the content to be reproduced is determined through the content selection UI 1310, in step S1201, but the present disclosure is not limited thereto. For example, upon completion of the step of generating content, the generated content may be immediately reproduced without a separate content selection process. In this case, in step S1201, without providing the separate content selection UI 1310, the generated content may be identified as content to be reproduced.

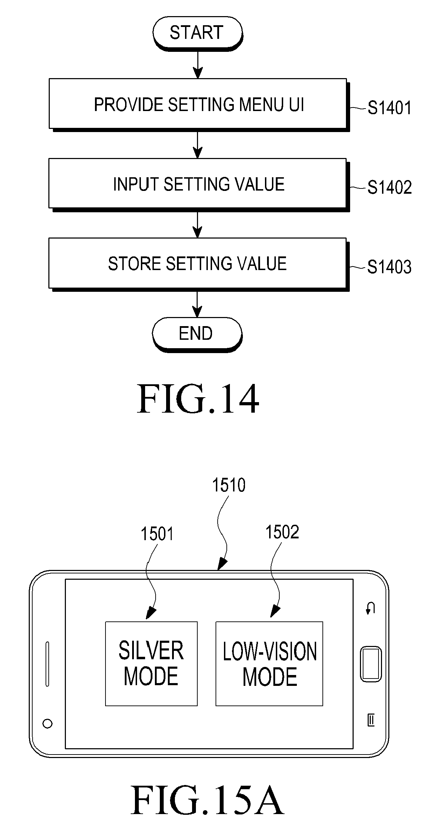

For an environment setting operation for the reading-enlargement application, FIG. 14 is a flowchart of the detailed steps of setting up an environment for the reading-enlargement application in step S806 of FIG. 8, and FIGS. 15A and 15B illustrate user interfaces displayed in step S806 of FIG. 8.

First, the steps of setting up an environment for the reading-enlargement application includes providing and displaying, in step S1401, an environment setting UI 1510, as shown in FIG. 15A, for receiving environment setting values and receiving the setting values through the environment setting UI 1510 in step S 1402, and for storing the received setting value in step S 1403. The environment setting UI 1510 may provide modes in which a default environment (e.g., the number of lines across which the text object image is displayed on the display unit, a font size, a magnification ratio of the text object image) is set up beforehand by using information on the quality of the vision of the user, such as having poor vision, and may select one of the modes, such as a "silver mode" selectable by an icon or button 1501 for users with good vision, and a "low-vision mode" selectable by an icon or button 1502 for users with poor vision, as shown in FIG. 15A. The electronic device 501 may also provide a magnification adjustment UI 1520, e.g., as shown in FIG. 15B, to display a text object sample based on the default environment that corresponds to the selected mode by the user, and the magnification adjustment UI 1520 may include an adjustment button 1521, which may be a slidable icon on a displayed bar with the slidable icon being responsive to a sliding touch input, to adjust the environment (e.g., the number of lines across which the text object image is displayed on the display unit, a font size, a magnification ratio of the text object image) set up beforehand. As an alternative to the adjustment button 1521, the electronic device 501 may identify an input of a pinch gesture, and adjust the number of lines across which the text object image is displayed, a font size, and a magnification ratio of the text object image in response to a zoom-in/zoom-out gesture corresponding to input of the pinch gesture.

If environment setting values for the reading-enlargement application are received through the environment setting UI 1510 and the magnification adjustment UI 1520, the electronic device 501 stores the environment setting values.

Upon completion of inputting the environment setting values for the reading-enlargement application, the electronic device 501 stops setting up the environment for the reading-enlargement application by ending the method of FIG. 14. Specifically, the electronic device 501 may stop inputting the environment setting values when all predetermined environment setting values have been input, the reading-enlargement application is switched into a standby mode without being displayed on the display unit by an input of a home button 1505, or the reading-enlargement application is switched to the main menu UI 901, as shown in FIG. 9, which is provided by the reading-enlargement application.

In an example of text object file formats, FIGS. 16A to 16E illustrate text object file formats generated and stored according to the image processing method of the present disclosure.

The text object file format may be data generated and stored in step S1004, including, as a default format, a content identifier 1601, a text object identifier 1602, text object arrangement information 1603, and text object image data 1604 as shown in FIG. 16A.

The content identifier 1601 has a value set to identify content, and may include a file name input when the content was stored.

The text object identifier 1602 identifies a text object image cut from the page image, including an identifier assigned for each text object.

The text object arrangement information 1603 may include an arrangement place of the text object image or arrangement relationship between text object images. For example, the text object arrangement information 1603 may be represented by an one dimensional coordinate value (first coordinate value) that indicates the place of the text object image in a page, or by a two dimensional coordinate value (second coordinate value) that includes the place of a line including the text object image and the place of the text object image in each line. Since the content may include a plurality of pages, the text object arrangement information 1603 may also be represented with the first coordinate value and a two dimensional value (third coordinate value) including the place of the page, or represented with the second coordinate value and a dimensional coordinate value (fourth coordinate value) including a coordinate value that indicates the place of the page.

The text object image data 1604 includes an actual image data value of the text object image.

The text object file format may further include environment setting data 1605, as shown in FIG. 16B. The environment setting data 1605 may include an identifier that indicates a type of the content input in step S1004 and the environment setting value stored in step S1202. By implementing the text object file format to include the environment setting value as in FIG. 16B, the method of reproducing the content (e.g., by performing step S1202) may involve ensuring the environment setting data included in the text object file format is identified and reproducing the content more quickly.

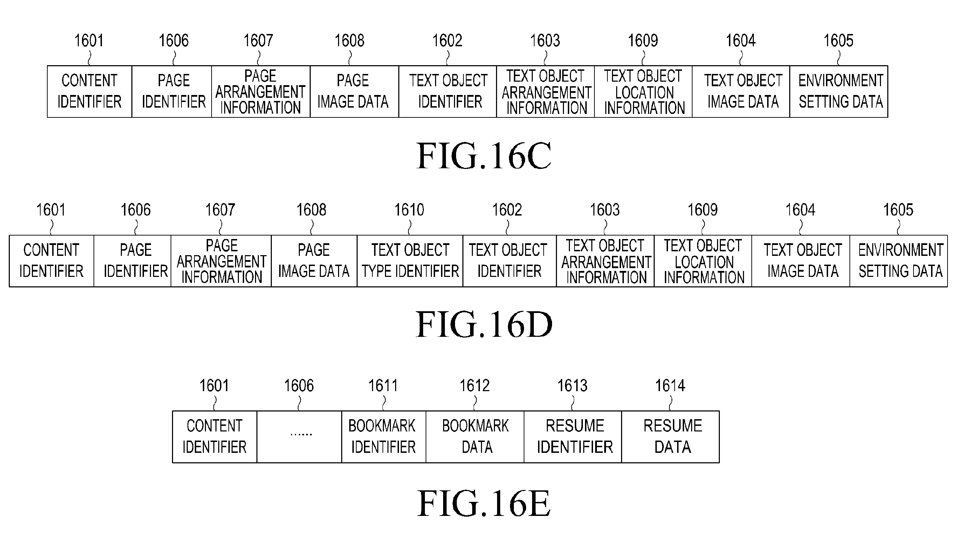

The text object image may be stored in conjunction with an image of the page in which the text object image is included, so that text object file format also stores data of the page image. Specifically, the text object file format in an alternative embodiment, shown in FIG. 16C, includes a page identifier 1606 to identify the page image, page arrangement information 1607 indicating the arrangement place of the page image or an arrangement relationship between page images, and actual image data 1608 of the page image.

In the step S805 of reproducing the content, the text object file format may further include, in another alternative embodiment shown in FIG. 16D, text object location information 1609 that indicates a location of the text object image in the page image to support displaying the location of the text object in the page image using the mini-map function.

Furthermore, in the content generation in step S804 and content reproduction in step S805, the text object image may be cut into various types using text arrangement properties, and thus the text object file format has a type of the text object image and the text object image may be arranged based on the type of the text object image.

For example, the text object image may be cut on a letter basis as in FIG. 7E, a word basis as in FIG. 7F, a line basis, or a length basis. In this regard, using the first space 713 positioned adjacent to a letter 712, which may include being positioned between letters, an area where a letter 712 is present is cut as a text object image 721, or the area having the letter 712 and the first space 713 may be cut together as a text object image 722. Similarly, using the second space positioned adjacent to a word, which may include being positioned between words, an area 714 where a word is present is cut as a text object image 731, or the area 714 and the second space 715 may be cut together as a text object image 732.

Using such aspects of the text object image, there may be a first text object type for the text object image of the area where a letter 712 is present, a second text object type for the text object image of the area having the letter 712 and the first space 713, a third text object type for the text object image of the area 714 where a word is present, a fourth text object type for the text object image of the area 714 and the second space 715, a fifth text object type for a text object resulting from line-based cut-off, or a sixth text object type for a text object resulting from length-based cut-off. During content generation in step S804, the text object file format may be implemented by inserting a text object type identifier 1610 that indicates a type of the text object image (i.e., any of the first to fourth text object types).

During content reproduction in step S805, the electronic device 501 may use the text object type identifier 1610 in the format in FIG. 16D to control displaying of the text object image.

Furthermore, in step S805, bookmark related information may also be inserted in the text object file format in FIG. 16E to support the bookmark function. That is, the text object file format may include a bookmark identifier 1611 to identify the bookmark and bookmark data 1612 to indicate a text object image for which the bookmark is set up. In addition, in step S805, the text object file format may include resume-related information to support the resume function to resume content reproduction from a point where content reproduction was stopped by the user. That is, the text object file format may include a resume identifier 1613 to identify the point where content reproduction was stopped, and resume data 1614 to indicate a text object image that corresponds to the point where the content reproduction was stopped.

With the embodiments of the present disclosure, the method and apparatus for providing the reading-enlargement application or service (also, referred to as 'text-enlargement display' application or service) using the electronic devices 100, 501 which provides a quick and stable reading service for the elderly or the disabled with poor vision while imaging a printed material.

Also, using a simpler user input, letters of the printed material may be successively displayed and/or displayed according to a sequence, and thus the user may use the electronic devices 100, 501 which provide the reading service more conveniently.

Furthermore, using a simple user input, the reading service may be enjoyed by the user more stably in an unswayed state without moving the electronic device 100, 501 while the printed material is imaged.

The apparatuses and methods of the disclosure may be implemented in hardware or firmware, or as software or computer code executed by hardware or firmware, or combinations thereof. Various components such as a controller, a central processing unit (CPU), a processor, and any unit or device of the disclosure includes at least hardware and/or other physical structures and elements. In addition, the software or computer code may also be stored in a non-transitory recording medium such as a CD ROM, a RAM, a ROM whether erasable or rewritable or not, a floppy disk, CDs, DVDs, memory chips, a hard disk, a magnetic storage media, an optical recording media, or a magneto-optical disk or computer code downloaded over a network originally stored on a remote recording medium, a computer readable recording medium, or a non-transitory machine readable medium and to be stored on a local recording medium, so that the methods of the disclosure may be rendered in such software, computer code, software modules, software objects, instructions, applications, applets, apps, etc. that is stored on the recording medium using a general purpose computer, a digital computer, or a special processor or in programmable or dedicated hardware, such as an ASIC or FPGA. As would be understood in the art, the computer, the processor, the microprocessor controller, or the programmable hardware include volatile and/or non-volatile storage and memory components, e.g., RAM, ROM, Flash, etc. that may store or receive software or computer code that, when accessed and executed by the computer, processor or hardware, implement the processing methods of the disclosure. In addition, it would be recognized that when a general purpose computer accesses code for implementing the processing of the disclosure, the execution of the code transforms the general purpose computer into a special purpose computer for executing the processing of the disclosure. In addition, the program may be electronically transferred through any medium such as communication signals transmitted by wire/wireless connections, and their equivalents. The programs and computer readable recording medium may also be distributed in network-coupled computer systems so that the computer readable code is stored and executed in a distributed fashion.

The electronic device 501 may receive and store the program from a program provider which is wired or wirelessly connected thereto. The program provider may include a memory for storing a program having instructions to perform the method, information used by the method, etc., a communication unit for conducting wired or wireless communication, and a controller for controlling transmission of the program. The program provider may provide the program to the electronic device 501 by a wired or wireless connection at request of the electronic device 501. The program provider may also provide the program to the electronic device 501 by a wired or wireless connection even without an inputted or generated request from the electronic device 501, e.g., if the electronic device 501 is located within a particular range.

According to the present disclosure, a quick and stable reading service for the elderly or the disabled with poor vision may be provided by imaging a printed material, such as books, newspapers, etc.

In addition, the reading service may be used more conveniently by the user by imaging the printed materials and successively displaying text of the printed materials with a simpler user input.

Furthermore, using a simple user input, the reading service may be enjoyed by the user more stably in an unswayed state without moving the electronic device 501 while the printed material is imaged.

Although the disclosure been discussed, various modifications may be made without departing from the disclosure. Therefore, the disclosure is not limited to the embodiments but defined by the appended claims and the equivalents thereof.

## Claims

1. A method of controlling display data in an electronic device, the method comprising:
receiving a page image including at least one letter;
obtaining at least one text object image by cutting an area that corresponds to the at least one letter from the page image; and
displaying the at least one text object image in response to an input.

2. The method of claim 1, wherein displaying the at least one text object image comprises, in response to repetitive identical inputs, successively displaying the at least one text object image that corresponds to the input.

3. The method of claim 2, wherein the page image includes a first letter belonging to a first line and a second letter belonging to a second line;
wherein successively displaying the at least one text object image comprises:
displaying a text object image that corresponds to the first letter; and
displaying a text object image that corresponds to the second letter, in response to a subsequent input that occurs after displaying a plurality of text object images that each correspond to the first letter.

4. The method of claim 1, wherein displaying the at least one text object image comprises:
selecting the at least one text object image using a predetermined environment setting value.

5. The method of claim 1, wherein receiving the page image comprises:
modifying the page image by cutting an area from the page image where the at least one letter is present.

6. The method of any of claims 1 to 5, wherein receiving the page image comprises receiving the page image captured by a camera or the page image stored in a memory.

7. The method of claim 6, wherein receiving the page image comprises:
receiving source images, with each source image including at least one letter; and
displaying the page image by combining the source images.

8. The method of claim 1, further comprising:
storing a content file including text object arrangement information that indicates an arrangement sequence of text object images and image data for the text object image.

9. An electronic device comprising:
a display unit;
an input interface;
a controller; and
a memory for storing at least a text-enlargement display program;
wherein the controller executes the text-enlargement display program including instructions, and performs:
receiving a page image including at least one letter;
obtaining at least one text object image by cutting an area that corresponds to the at least one letter from the page image; and
controlling the display unit to display the at least one text object image in response to an input received at the input interface.

10. The electronic device of claim 9, wherein the text-enlargement display program further includes:
an instruction, in response to repetitive identical inputs, for successively displaying the at least one text object image that corresponds to the input.

11. The electronic device of claim 10, wherein the page image includes a first letter belonging to a first line and a second letter belonging to a second line;
wherein the instruction for successively displaying the at least one text object image comprises instructions for:
displaying a text object image that corresponds to the first letter; and
displaying a text object image that corresponds to the second letter, in response to a subsequent input that occurs after displaying a plurality of text object images that each correspond to the first letter.

12. The electronic device of claim 9, wherein the text-enlargement display program selects the at least one text object image using a predetermined environment setting value.

13. The electronic device of claim 9, wherein the text-enlargement display program cuts off the text object image to have a space adjacent to the at least one letter.

14. The electronic device of claim 9, wherein the text-enlargement display program creates a content file to have text object arrangement information that indicates a place of the at least one text object image in the arrangement sequence and image data for the at least one text object image.

15. The electronic device of claim 14, wherein the text-enlargement display program creates the content file to include environment setting data set up to display, in an environment, the at least one text object image.
